# EUROPÄISCHE PATENTSCHRIFT

(11) **EP 2 928 653 B1**
(45) Veröffentlichungstag und Bekanntmachung des Hinweises auf die Patenterteilung: **26.09.2018**
(21) Anmeldenummer: 13814448.0
(22) Anmeldetag: 03.12.2013
(51) Int. Cl.: B29B 15/10, B29C 70/46, C08J 5/04, B29K 77/00

(54) **VERFAHREN ZUR HERSTELLUNG EINES FASERVERSTÄRKTEN VERBUNDWERKSTOFFS**
METHOD FOR PRODUCING A FIBRE REINFORCED COMPOUND MATERIAL
PROCÉDÉ DE FABRICATION D'UN MATÉRIAU COMPOSITE RENFORCÉ PAR DES FIBRES

(30) Priorität: 04.12.2012 EP 12195514
(43) Veröffentlichungstag der Anmeldung: 14.10.2015
(73) Patentinhaber: BASF SE, 67056 Ludwigshafen am Rhein (DE)
(72) Erfinder: DESBOIS, Philippe, 68535 Edingen-Neckarhausen (DE); BIEDASEK, Silke, 68159 Mannheim (DE)
(86) Internationale Anmeldenummer: PCT/EP2013/075333
(87) Internationale Veröffentlichungsnummer: WO 2014/086757

(56) Entgegenhaltungen:
- WO-A1-2008/155318
- WO-A1-2012/045806
- WO-A1-2012/116947
- WO-A1-2012/127029
- FR-A1- 2 864 094
- FR-A1- 2 953 847

## Beschreibung

### HINTERGRUND DER ERFINDUNG

Die vorliegende Erfindung betrifft ein Verfahren zur Herstellung eines faserverstärkten Verbundwerkstoffs mit einer Polyamidmatrix.

### STAND DER TECHNIK

Thermisch nachverformbare Verbundwerkstoffe, die aus einem Verstärkungsfasergebilde und einer umschließenden Matrix aus einem thermoplastischen Polymer bestehen, haben technisch vielfältige Anwendungen gefunden. Solche Verbundkörper mit einer die textile Verstärkung vollständig umschließenden Polymermatrix zeichnen sich durch gute anwendungstechnische Eigenschaften, wie Dimensionsstabilität, weitgehend konstante Materialeigenschaften (zumindest unter Feuchtigkeitsausschluss), eine hohe Beständigkeit gegen wässrige Systeme, Fette, Öle, Treibstoffe und Alkohole aus, widerstehen Umwelteinflüssen und sind in der Regel auch hinreichend thermisch beständig. Die industrielle Herstellung von Verbundwerkstoffen erfolgt im Wesentlichen durch Pultrusionsverfahren (Strangziehverfahren) zur Herstellung von Endlosprofilen oder durch Pressverfahren, bei denen ein Fasermaterial mit der Polymermatrix imprägniert und einer Formgebung unter Druck unterzogen wird.

In einer speziellen Ausführung werden zur Herstellung von Verbundwerkstoffen so genannte "Prepregs" eingesetzt, bei denen das Fasermaterial entweder mit einem zur Bildung der Polymermatrix geeigneten reaktiven Precursor oder mit einem Thermoplast getränkt wird, wobei ein Faserhalbzeug entsteht, das anschließend einer Konsolidierung unterzogen wird. Die Konsolidierung des Materialverbunds erfolgt in der Regel bei erhöhtem Druck und erhöhter Temperatur. Dabei kann im Falle des Einsatzes eines reaktiven Precursors eine teilweise oder vollständige Polymerisation erfolgen. Die Konsolidierung verhindert oder vermindert die Bildung von Lufteinschlüssen und stellt eine gute Verbindung zwischen den einzelnen Verstärkungslagen her. Imprägnierte und konsolidierte faserverstärkte Verbundwerkstoffe, die thermisch nachverformbar sind, werden auch als "Organobleche" bezeichnet. Sie können, gegebenenfalls nach längerer Lagerzeit, einer Umformung zur Herstellung des Endprodukts unterzogen werden.

Wird zur Herstellung faserverstärkter Verbundwerkstoffe ein bereits auspolymerisiertes Polyamid als thermoplastisches Matrixpolymer eingesetzt, so stellt sich vielfach das Problem einer hohen Viskosität, d. h. einer geringen Fließfähigkeit des Polymers bei der Schmelztemperatur. Um dennoch zu Produkten mit guten mechanischen Eigenschatten zu gelangen, ist die Anwendung höherer Temperaturen und/oder höherer Drücke erforderlich, und auch dann sind in der Regel längere Verweilzeiten für die Imprägnierung/Tränkung erforderlich. Werden die Verstärkungsfasern nur unzureichend imprägniert, so weisen die resultierenden Verbundstoffe schlechtere mechanische Eigenschaften auf. Es besteht daher ein Bedarf an diesbezüglich verbesserten Verfahren zur Herstellung faserverstärkter Verbundwerkstoffe mit einer Polyamidmatrix.

Die DE 196 02 638 A1 beschreibt ein Verfahren zur Herstellung von thermisch nachverformbaren Verbundwerkstoffen mit einer das Verstärkungsfasergebilde umschließenden Matrix aus Polylactam. Dabei wird eine Aktivator- und Katalysator-haltige Mischung unter Bedingungen eingesetzt, bei denen die anionische Lactampolymerisation erfolgt. Somit umschließt und durchdringt die Lactamschmelze im noch niederviskosen Zustand das Verstärkungsfasergebilde und bildet später im polymerisierten und festen Zustand die Polymermatrix des Verbundwerkstoffes. Diese ist thermoplastisch und ermöglicht dessen Nachverformbarkeit. Da sich die Polymerisation unmittelbar an das Tränken anschließt, ist die Herstellungsgeschwindigkeit durch den Polymerisationsschritt limitiert, so dass eine effektive großtechnische Herstellung von Bauteilen aus Organoblechen nicht möglich ist.

Die WO 2003/053661 beschreibt ein Verfahren zur Herstellung eines Verbundwerkstoffes aus Verstärkungsmitteln und einem thermoplastischen Polyamid als Matrix durch aktivierte anionische Lactam-Polymerisation. Dabei werden die zugeführten Verstärkungsmittel mit einer für die anionische Polymerisation aktivierten Lactamschmelze bei einer Temperatur imprägniert, bei welcher die aktivierte Lactamschmelze im Wesentlichen noch nicht polymerisiert. Die für die anionische Polymerisation aktivierte Lactamschmelze wird hergestellt, indem zunächst ein Lactam oder Lactamgemisch zu einer Monomerschmelze aufgeschmolzen wird. Im Wesentlichen unmittelbar vor dem Imprägnierungsprozess des Verstärkungsmittels wird der Monomerschmelze ein Flüssiginitiator zugemischt, welcher gleichzeitig Aktivator und Katalysator gelöst enthält. Das imprägnierte Verstärkungsmittel wird dann ohne Passieren einer Form in einer Heizeinheit erwärmt und polymerisiert.

Die PCT/EP 2012/053246 beschreibt ein Verfahren zur Herstellung von faserverstärkten, flachen Halbzeugen, das folgende Schritte umfasst:
a) Tränken von textilen Strukturen mit einer Mischung, enthaltend geschmolzenes Lactam, Katalysator und gegebenenfalls mindestens einen Aktivator,
b) Abkühlen der getränkten textilen Strukturen, und
c) Konfektionieren der abgekühlten, getränkten textilen Strukturen zu einem flachen Halbzeug.

In diesem Dokument ist beschrieben, dass auf die Oberseite und Unterseite der getränkten textilen Struktur eine Folie aufgebracht werden kann oder diese ganz in eine Folie eingeschweißt werden kann. Dies ist insbesondere erforderlich, wenn das erhaltene Halbzeug nicht oder nicht vollständig auspolymerisiert ist, da der zur anionischen Lactampolymerisation eingesetzte Katalysator in der Regel hydrolyseempfindlich ist. Durch das Umschließen des Halbzeugs mit Folie wird dessen Lagerfähigkeit erhöht. Sofern ein Lactam-haltiges Halbzeug nicht in eine Folie eingeschweißt ist, so ist nach der Lehre der PCT/EP 2012/053246 eine Weiterverarbeitung innerhalb von fünf Minuten erforderlich, um eine unerwünschte Wasseraufnahme zu vermeiden, durch die der Katalysator deaktiviert wird und das Lactam nicht mehr vollständig auspolymerisiert.

Die WO 2012/045806 beschreibt ein Verfahren zur Herstellung einer stabilen Monomer-Zusammensetzung, die neben dem Lactam und/oder Lacton-Monomer einen Initiator und einen Katalysator enthält. Diese Monomer-Zusammensetzung kann durch Aufschmelzen und Abkühlen der Komponenten erhalten werden, wobei insbesondere eine schnelle Kristallisation der Monomere (Lactam und/oder Lacton) entscheidend ist und ist zunächst gegenüber einer Polymerisation stabil. Diese Monomer-Zusammensetzungen können über mehrere Monate gelagert und zu einem späteren Zeitpunkt für die Polyamidherstellung eingesetzt werden. Ein konkreter Einsatz zur Herstellung eines faserverstärkten Verbundwerkstoffs und speziell ein Trockenauftragsverfahren, bei dem das Lactam noch zu einem wesentlichen Teil als Monomer vorliegt, ist nicht beschrieben.

Die PCT/EP 2012/062792 beschreibt feste Partikel, die 50 bis 99,7 Gewichtsteile mindestens eines Lactams A), 0,2 bis 8 Gewichtsteile mindestens eines Aktivators (A) und 0,1 bis 3,6 Gewichtsteile mindestens eines Katalysators B) enthalten. Zu ihrer Herstellung werden vorzugsweise die Komponenten A), B) und (A) und gegebenenfalls weitere Komponenten bei einer Temperatur im Bereich vom Schmelzpunkt des höchst schmelzenden im Gemisch enthaltenen Lactam-Monomeren bis 50 °C oberhalb des Schmelzpunkts des höchst schmelzenden im Gemisch enthaltenen Lactam-Monomeren vermischt, das Gemisch in die Tropfenform überführt, die erhaltenen Tropfen auf eine Temperatur im Bereich von 10 °C bis 100 °C unterhalb des Schmelzpunkts des Gemischs gekühlt und die abgekühlte Mischung optional granuliert. Ein Einsatz zur Herstellung eines faserverstärkten Verbundwerkstoffs und speziell ein Trockenauftragsverfahren ist auch in diesem Dokument nicht beschrieben.

Die bekannten Verfahren zur Herstellung von faserverstärkten Verbundwerkstoffen aus einem Fasermaterial und einer Mischung, die wenigstens ein Lactam, wenigstens einen Katalysator und wenigstens einen Aktivator enthält, sind noch verbesserungswürdig.

So erfolgt das Inkontaktbringen des Fasermaterials mit der die Matrix bildenden Mischung bislang ausschließlich mit einer flüssigen Mischung aus Lactam, Katalysator und Aktivator. Erfolgt die Herstellung des faserverstärkten Verbundstoffs nicht beim Hersteller der Mischung aus Lactam, Katalysator und Aktivator, sondern bei einem weiterverarbeitenden Betrieb, so muss dieser die entsprechenden Apparaturen vorrätig halten, um die im festen Zustand gelagerte und transportierte Mischung vor dem Auftrag auf ein Fasermaterial zu verflüssigen.

Wird zum Tränken eine Lactam-haltige Schmelze eingesetzt, so muss das aktivierte Lactam längere Zeit in einem Temperaturbereich gehandhabt werden, in dem bereits eine merkliche Polymerisation erfolgen kann. Zudem sind derartige Schmelzen empfindlich gegen Luftfeuchtigkeit.

Beim Einsatz einer Lösung der Lactamzusammensetzung in einem organischen Lösungsmittel ergibt sich das Problem der Entfernung und Rückgewinnung/Entsorgung des Lösungsmittels nach dem Auftrag.

Zudem besteht beim Einsatz einer niedrigviskosen flüssigen Mischung aus Lactam, Katalysator und Aktivator die Gefahr, dass nicht die gesamte Lactamzusammensetzung von dem Fasermaterial aufgenommen wird und der Rest isoliert und zurückgeführt oder entsorgt werden muss. Zudem ist die Bereitstellung einer Schmelze mit erhöhtem apparativen Aufwand beim Endanwender verbunden.

Es besteht weiterhin Bedarf an einem Verfahren zur Herstellung eines faserverstärkten Verbundwerkstoffs mit einer Polyamidmatrix, bei dem die Nachteile der aus dem Stand der Technik bekannten Verfahren vermieden werden.

Es wurde nun überraschenderweise gefunden, dass sich zur Herstellung von faserverstärkten Verbundwerkstoffen mit einer Polyamidmatrix besonders vorteilhaft eine feste polymerisierbare Zusammensetzung eignet, die mindestens ein Lactam, mindestens einen Katalysator und mindestens einen Aktivator enthält und die in fester, rieselfähiger Form auf das verstärkende Fasermaterial aufgetragen wird. Es wurde weiterhin gefunden, dass sich zum Einsatz in diesem Verfahren speziell feste Partikel eignen, die vorzugsweise einen mittleren Durchmesser im Bereich von 1 bis 2000 µm aufweisen.

### ZUSAMMENFASSUNG DER ERFINDUNG

Gegenstand der Erfindung ist ein Verfahren zur Herstellung eines faserverstärkten Verbundwerkstoffs mit einer Polyamidmatrix, bei dem man
a) eine feste polymerisierbare Zusammensetzung bereitstellt, die
   A) mindestens ein Lactam,
   B) mindestens einen Katalysator und
   C) mindestens einen Aktivator, der ausgewählt ist unter Isocyanaten, Säureanhydriden, Säurehalogeniden, deren Umsetzungsprodukten mit A) und deren Mischungen,
      umfasst,
b) die in Schritt a) bereitgestellte polymerisierbare Zusammensetzung in fester, rieselfähiger Form auf ein Fasermaterial aufträgt,
c) das in Schritt b) erhaltene Fasermaterial mit der aufgetragenen polymerisierbaren Zusammensetzung einer Behandlung unter erhöhtem Druck und bei einer Temperatur unterzieht, bei der die Mischung aus den Komponenten A), B) und C) fließfähig ist, wobei diese das Fasermaterial umschließt und durchdringt,
d) das in Schritt c) erhaltene Produkt abkühlt.

### BESCHREIBUNG DER ERFINDUNG

Das erfindungsgemäße Verfahren weist die folgenden Vorteile auf:
- Die erfindungsgemäß eingesetzte feste polymerisierbare Zusammensetzung, welche das Lactammonomer, den Katalysator und den Aktivator sowie gegebenenfalls weitere Additive bereits enthält, kann direkt in fester Form auf ein Fasermaterial, z. B. einen Textilträger, aufgetragen und anschließend fließfähig gemacht, verteilt und gegebenenfalls teilweise oder vollständig polymerisiert werden. Somit besteht die Möglichkeit, eine lagerfähige Einkomponentenzusammensetzung als Handelsform bereitzustellen. Diese kann dann bei einem verarbeitenden Betrieb zur Herstellung faserverstärkter Verbundstoffe eingesetzt werden, ohne dass dieser über Apparaturen zur Verflüssigung verfügen muss.
- Die polymerisierbare Lactamzusammensetzung muss nicht bereits beim Auftragen auf das Fasermaterial unter strenger Temperaturkontrolle verflüssigt werden, um eine ungewollte Polymerisation vor oder während des Auftragens zu vermeiden.
- Die Entfernung eines organischen Lösungsmittels, wie sie bei einem Flüssigauftrag aus einer Lösung erforderlich ist, entfällt.
- Es besteht nicht die Gefahr, dass die niedrigviskose flüssige Mischung aus Lactam, Katalysator und Aktivator nicht vollständig von dem Fasermaterial aufgenommen wird und der Rest isoliert und zurückgeführt oder entsorgt werden muss.
- Die mit dem Einsatz bereits auspolymerisierter Polyamide als thermoplastisches Matrixpolymer verbundenen Nachteile, wie die Notwendigkeit zur Anwendung höherer Temperaturen und/oder höherer Drücke und/oder längerer Verweilzeiten für die Imprägnierung/Tränkung werden vermieden.
- Das erfindungsgemäße Verfahren ermöglicht eine vollständige Imprägnierung der Verstärkungsfasern bei wirtschaftlich akzeptablen Produktionszeiten und die Bildung von Produkten mit guten mechanischen Eigenschaften.
- Mit Hilfe des erfindungsgemäßen Verfahrens ist es möglich, faserverstärkte Verbundwerkstoffe mit einem hohen Faseranteil und, falls vorhanden, Füllstoffanteil herzustellen.
- Das erfindungsgemäße Verfahren zur Herstellung von faserverstärkten Verbundwerkstoffen durch aktivierte anionische Lactampolymerisation unter Verwendung einer polymerisierbaren Zusammensetzung als Rohstoff zeichnet sich durch eine hohe Energie- und Zeiteffizienz aus.

Mit dem Begriff "feste polymerisierbare Zusammensetzung" ist im Rahmen der vorliegenden Erfindung eine Zusammensetzung gemeint, welche bei Raumtemperatur unter Normalbedingungen (20 °C, 1013 mbar) fest ist. Bevorzugt ist die erfindungsgemäß eingesetzte polymerisierbare Zusammensetzung auch bei höheren Temperaturen noch fest. Vorzugsweise ist die erfindungsgemäß eingesetzte polymerisierbare Zusammensetzung bei einer Temperatur von wenigstens 50 °C, besonders bevorzugt bei einer Temperatur von wenigstens 60 °C noch fest.

Der Begriff "Schmelze" bezeichnet im Rahmen der Erfindung auch flüssige Zusammensetzungen, die wenigstens eine geschmolzene Komponente und wenigstens eine darin gelöste weitere Komponente umfassen, z. B. geschmolzenes Lactam A) mit darin gelöstem Katalysator B) und Aktivator C). Im Rahmen der vorliegenden Erfindung wird der Begriff "Schmelzen" nicht streng in einem physikochemischen Sinn verstanden, sondern auch synonym verwendet mit Überführen in einen fließfähigen Zustand. Der Begriff Schmelzpunkt bezeichnet im Rahmen der Erfindung auch den Übergang von einem (teil)festen, nicht fließfähigen Zustand in den schmelzflüssigen Zustand, wie er anderweitig auch als Verfestigungspunkt bezeichnet wird.

Ein Polymer ist "formstabil", wenn es nicht mehr fließfähig ist.

Im Sinne der Erfindung sind "Halbzeuge" oder "Organobleche" imprägnierte und konsolidierte faserverstärkte Verbundwerkstoffe, die thermisch nachverformbar sind. Sie können vollständig auspolymerisiert sein oder noch polymerisierbares Lactam A) sowie Katalysator B) und Aktivator C) enthalten, die durch thermische Nachbehandlung polymerisieren.

Im Sinne der Erfindung haben "Kurzfasern" eine Länge von 0,1 bis 1 mm, "Langfasern" eine Länge von 1 bis 50 mm und "Endlosfasern" eine Länge von größer als 50 mm. Endlosfasern werden zur Herstellung der faserverstärkten Verbundwerkstoffe in Form einer textilen Struktur, z. B. als Gewebe, Gewirke, Gestricke, Gelege oder Vliese eingesetzt. Bauteile mit Endlosfasern erzielen in der Regel die besten Steifigkeits- und Festigkeitswerte.

Bei der Herstellung der erfindungsgemäß in Schritt a) eingesetzten polymerisierbaren Zusammensetzung, wie auch bei der erfindungsgemäßen Herstellung der faserverstärkten Verbundwerkstoffe, kann es vorteilhaft sein, den Anteil von an der Herstellung der polymerisierbaren Zusammensetzung oder des faserverstärkten Verbundwerkstoffs nicht beteiligten Komponenten so gering wie möglich zu halten. Dazu zählen speziell Wasser, Kohlendioxid und/oder Sauerstoff. In einer speziellen Ausführung sind daher die eingesetzten Komponenten und Apparaturen im Wesentlichen frei von Wasser, Kohlendioxid und/oder Sauerstoff. Vorzugsweise wird zur Lagerung der eingesetzten Komponenten und/oder beim Befüllen der Pressvorrichtung und/oder bei der Polymerisation eine Inertgasatmosphäre eingesetzt. Geeignete Inertgase sind z. B. Stickstoff oder Argon. In vielen Fällen ist eine vollständige Inertisierung nicht erforderlich, sondern bereits eine Bedeckung der eingesetzten Behälter, Formen, etc. mit einem Inertgas ausreichend.

### Schritt a)

Bevorzugt enthält die in Schritt a) bereitgestellte polymerisierbare Zusammensetzung
- 50 bis 99,7 Gewichtsteile mindestens eines Lactams A),
- 0,1 bis 3,6 Gewichtsteile mindestens eines Katalysators B) und
- 0,2 bis 8,0 Gewichtsteile mindestens eines Aktivators C),
bezogen auf das Gesamtgewicht der Zusammensetzung.

Vorzugsweise wird eine polymerisierbare Zusammensetzung eingesetzt, die, bezogen auf das Gesamtgewicht der Zusammensetzung, 70 bis 98 Gewichtsteile, besonders bevorzugt 80 bis 95 Gewichtsteile mindestens eines Lactams A) enthält.

Vorzugsweise wird eine polymerisierbare Zusammensetzung eingesetzt, die, bezogen auf das Gesamtgewicht der Zusammensetzung, 0,2 bis 8 Gewichtsteile, bevorzugt 2,4 bis 8 Gewichtsteile, besonders bevorzugt 3,2 bis 5,6 Gewichtsteile mindestens eines Aktivators C) enthält.

Vorzugsweise wird eine polymerisierbare Zusammensetzung eingesetzt, die, bezogen auf das Gesamtgewicht der Zusammensetzung, 0,1 bis 3,6 Gewichtsteile, bevorzugt 0,54 bis 3,6 Gewichtsteile, besonders bevorzugt 0,64 bis 3 Gewichtsteile mindestens eines Katalysators B) enthält.

Die in Schritt a) bereitgestellte polymerisierbare Zusammensetzung ist bei Raumtemperatur stabil und fest. Insbesondere polymerisiert die erfindungsgemäß eingesetzte polymerisierbare Zusammensetzung nicht unterhalb des Schmelzpunktes der Lactamkomponente und ist somit gegenüber einer ungewollten vorzeitigen Polymerisation stabil. Die erfindungsgemäß eingesetzte polymerisierbare Zusammensetzung kann über mehrere Monate gelagert und zu einem beliebigen Zeitpunkt für die Polyamidherstellung eingesetzt werden.

Als Lactame eignen sich insbesondere ε-Caprolactam, 2-Piperidon (δ-Valerolactam), 2-Pyrrolidon (γ-Butyrolactam), Capryllactam, Önanthlactam, Lauryllactam, Laurinlactam oder deren Mischungen. Bevorzugt sind Caprolactam, Lauryllactam oder deren Mischungen. Besonders bevorzugt wird als Lactam ausschließlich Caprolactam oder ausschließlich Lauryllactam eingesetzt.

Geeignete Katalysatoren B) für den Einsatz in dem erfindungsgemäßen Verfahren sind gängige Katalysatoren, wie sie üblicherweise für die anionische Polymerisation eingesetzt werden.

Derartige Katalysatoren sind beispielsweise aus Kunststoff-Handbuch, Band 3/4, Technische Thermoplaste, Polyamide, Carl Hanser Verlag, München, Wien, 1998, insbesondere S. 48 ff. bekannt. Bevorzugt ist der Katalysator B) ausgewählt unter Natriumcaprolactamat, Kaliumcaprolactamat, Bromid-Magnesiumcaprolactamat, Chloridmagnesiumcaprolactamat, Magnesiumbiscaprolactamat, Natriumhydrid, Natrium, Natriumhydroxid, Natriummethanolat, Natriumethanolat, Natriumpropanolat, Natriumbutanolat, Kaliumhydrid, Kalium, Kaliumhydroxid, Kaliummethanolat, Kaliumethanolat, Kaliumpropanolat, Kaliumbutanolat und deren Mischungen.

Besonders bevorzugt wird ein Katalysator B) eingesetzt, der ausgewählt ist unter Natriumhydrid, Natrium und Natriumcaprolactamat. Insbesondere wird als Katalysator B) Natriumcaprolactamat eingesetzt. In einer speziellen Ausführungsform wird eine Lösung von Natriumcaprolactamat in Caprolactam eingesetzt, z. B. Brüggolen® C10 der Firma Brüggemann, das 17 bis 19 Gew.-% Natriumcaprolactamat in Caprolactam enthält. Als Katalysator B) eignet sich ebenfalls insbesondere Bromid-Magnesiumcaprolactamat, z. B. Brüggolen® C1 der Firma Brüggemann.

Das Molverhältnis von Lactam A) zu Katalysator B) kann in weiten Grenzen variiert werden, es beträgt in der Regel 1 : 1 bis 10000 : 1, bevorzugt 5 : 1 bis 1000 : 1, besonders bevorzugt 1 : 1 bis 500 : 1.

In der erfindungsgemäß eingesetzten polymerisierbaren Zusammensetzung ist mindestens ein Aktivator C) für die anionische Polymerisation enthalten.

Als Aktivator C) eignen sich generell Isocyanate, Säureanhydride und Säurehalogenide bzw. deren Umsetzungsprodukte mit dem Lactammonomer. Als Aktivator eignen sich auch beispielsweise Vorstufen, welche zusammen mit dem Lactam A) in situ ein aktiviertes Lactam bilden, z. B. N-Acyllactame. Die Anzahl der wachsenden Ketten hängt von der Aktivatormenge ab.

Als Aktivatoren C) eignen sich unter anderem aliphatische Diisocyanate, wie Butylendiisocyanat, Hexamethylendiisocyanat, Octamethylendiisocyanat, Decamethylendiisocyanat, Undecamethylendiisocyanat, Dodecamethylendiisocyanat, 4,4'-Methylenbis(cyclohexylisocyanat), Isophorondiisocyanat, aromatische Diisocyanate, wie Toluyldiisocyanat, 4,4'-Methylenbis(phenyl)isocyanat oder Polyisocyanate (z. B. Isocyanate von Hexamethylendiisocyanat), Allophanate (z. B. Ethylallophanat). Insbesondere können Mischungen der genannten Verbindungen als Aktivator C) eingesetzt werden.

Als Aktivatoren C) eignen sich weiterhin aliphatische Disäurehalogenide, wie Butylendisäurechlorid, Butylendisäurebromid, Hexamethylendisäurechlorid, Hexamethylendisäurebromid, Octamethylendisäurechlorid, Octamethylendisäurebromid, Decamethylendisäurechlorid, Decamethylendisäurebromid, Dodecamethylendisäurechlorid, Dodecamethylendisäurebromid, 4,4'-Methylenbis(cyclohexylsäurechlorid), 4,4'-Methylenbis(cyclohexylsäurebromid), Isophorondisäurechlorid, Isophorondisäurebromid als auch aromatische Disäurehalogenide, wie Toluymethylenldisäurechlorid, Toluylmethylendisäurechlorid, 4,4'-Methylenbis(phenyl)säurechlorid, 4,4'-Methylenbis(phenyl)säurebromid. Insbesondere können Mischungen der genannten Verbindung als Aktivator C) eingesetzt werden.

Insbesondere bevorzugt ist eine polymerisierbare Zusammensetzung, wobei als Aktivator C) mindestens eine Verbindung eingesetzt wird, ausgewählt aus der Gruppe bestehend aus aliphatischen Diisocyanaten, aromatischen Diisocyanaten, Polyisocyanaten, aliphatischen Disäurehalogeniden und aromatischen Disäurehalogeniden.

In einer bevorzugten Ausführungsform wird als Aktivator C) mindestens eine Verbindung eingesetzt, die ausgewählt ist unter Hexamethylendiisocyanat, Isophorondiisocyanat, Hexamethylendisäurebromid, Hexamethylendisäurechlorid und deren Mischungen. Besonders bevorzugt wird Hexamethylendiisocyanat als Aktivator C) eingesetzt.

Der Aktivator C) kann in fester Form oder als Lösung eingesetzt werden. Insbesondere kann der Aktivator C) in Caprolactam gelöst eingesetzt werden. Geeignet als Aktivator C) ist beispielsweise ein Caprolactam-blockiertes 1,6-Hexamethylendiisocyanat. Eine Lösung eines Caprolactam-blockierten 1,6-Hexamethylendiisocyanats in Caprolactam ist kommerziell unter der Bezeichnung Brüggolen® C20 von der Firma Brüggemann erhältlich.

Das Molverhältnis von Lactam A) zu Aktivator C) kann in weiten Grenzen variiert werden und beträgt in der Regel 1 : 1 bis 10000 : 1, bevorzugt 5 : 1 bis 2000 : 1, besonders bevorzugt 20 : 1 bis 1000 : 1.

Die erfindungsgemäß in Schritt a) bereitgestellte feste polymerisierbare Zusammensetzung kann neben den zuvor genannten Komponenten A), B) und C) noch wenigstens eine weitere Komponente enthalten, ausgewählt unter Monomeren, Polymeren, Füllstoffen, Faserstoffen und weiteren Zusatzstoffen.

Die polymerisierbare Zusammensetzung kann zusätzlich zu wenigstens einem Lactam A) wenigstens ein damit copolymerisierbares Monomer M) enthalten. Das Monomer M) ist vorzugsweise ausgewählt unter Lactonen und Vernetzern. Das Monomer M) ist vorzugsweise ausschließlich ausgewählt unter Lactonen. Bevorzugte Lactone sind beispielsweise ε-Caprolacton und/oder γ-Butyrolacton.

Die erfindungsgemäß in Schritt a) bereitgestellte feste polymerisierbare Zusammensetzung kann ein vernetzendes Monomer M) enthalten. Ein vernetzendes Monomer kann eine Verbindung darstellen, die mehr als eine Gruppe enthält, welche mit dem Lactammonomer copolymerisiert werden kann. Beispiele für solche Gruppen sind Epoxy-, Amin-, Carboxyl-, Anhydrid-, Oxazolin-, Carbodiimid-, Urethan-, Isocyanat- und Lactam-Gruppen. Als vernetzende Monomere M) eignen sich beispielsweise aminosubstituierte Lactame, wie Aminocaprolactam, Aminopiperidon, Aminopyrrolidon, Aminocapryllactam, Aminoönanthlactam, Aminolaurinlactam, Aminolauryllactam oder deren Mischungen, bevorzugt Aminocaprolactam, Aminopyrrolidon oder deren Mischungen, besonders bevorzugt Aminocaprolactam.

Bevorzugt beträgt die Menge an Monomer M) höchstens 40 Gew.-%, bezogen auf das Gesamtgewicht der zur Polymerisation eingesetzten Monomere. Bevorzugt beträgt der Anteil an Monomer M) 0 bis 30 Gew.-%, besonders bevorzugt 0,1 bis 20 Gew.-%, bezogen auf das Gesamtgewicht der zur Polymerisation eingesetzten Monomere.

In einer bevorzugten Ausführungsform enthält die feste polymerisierbare Zusammensetzung ausschließlich Lactame A) als Monomere.

Die polymerisierbare Zusammensetzung kann ein oder mehrere Polymere enthalten. Das Polymer kann prinzipiell ausgewählt sein unter Polymeren, die bei der Polymerisation der erfindungsgemäß polymerisierbaren Zusammensetzung erhalten werden, davon verschiedenen Polymeren und Polymerblends.

Bevorzugt enthält die in Schritt a) bereitgestellte polymerisierbare Zusammensetzung, bezogen auf das Gesamtgewicht der Zusammensetzung, 0 bis 40 Gew.-%, besonders bevorzugt 0 bis 20 Gew.-%, insbesondere 0 bis 10 Gew.-% Polymere, wie sie bei der Polymerisation der in der Zusammensetzung enthaltenen Lactame A) und, falls vorhanden, Monomere M), erhalten werden. Der Begriff Polymere erfasst dabei auch oligomere Verbindungen.

Des Weiteren kann die in Schritt a) bereitgestellte polymerisierbare Zusammensetzung Polymere enthalten, die der Zusammensetzung bewusst zugesetzt werden. Bevorzugt enthält die in Schritt a) bereitgestellte polymerisierbare Zusammensetzung, bezogen auf das Gesamtgewicht der Zusammensetzung, 0 bis 40 Gew.-%, besonders bevorzugt 0 bis 20 Gew.-%, insbesondere 0 bis 10 Gew.-% zugesetzte Polymere. Wenn die polymerisierbare Zusammensetzung wenigstens ein zugesetztes Polymer enthält, so vorzugsweise in einer Menge von wenigstens 0,1 Gew.-%, besonders bevorzugt 0,5 Gew.-%, bezogen auf das Gesamtgewicht der polymerisierbaren Zusammensetzung. In einer speziellen Ausführungsform enthält die polymerisierbare Zusammensetzung kein Polymer, wie es bei der Polymerisation der erfindungsgemäß eingesetzten polymerisierbaren Zusammensetzung gebildet wird. In einer weiteren speziellen Ausführungsform enthält die polymerisierbare Zusammensetzung kein zugesetztes Polymer.

Die polymerisierbare Zusammensetzung kann ein oder mehrere Polymere enthalten, welche bevorzugt in Form eines Polymers zu der Zusammensetzung zugesetzt werden. In einer ersten Ausführungsform enthält das zugegebene Polymer Gruppen, die zur Bildung von Block- und/oder Pfropf-Copolymeren mit dem aus dem Lactammonomeren gebildeten Polymeren geeignet sind. Beispiele für solche Gruppen sind Epoxy-, Amin-, Carboxyl-, Anhydrid-, Oxazolin-, Carbodiimid-, Urethan-, Isocyanat- und Lactam-Gruppen.

In einer weiteren Ausführungsform enthält die polymerisierbare Zusammensetzung mindestens ein zugesetztes Polymer, ausgewählt unter Polystyrol, Styrol-Copolymerisaten, Polyphenylenoxidethern, Polyolefinen, Polyestern, Polyethern, Polyetheraminen, Polymeren aus vinylgruppenhaltigen Monomeren und Mischungen der genannten Polymeren. In einer bevorzugten Ausführungsform enthält die polymerisierbare Zusammensetzung mindestens ein Polymer, ausgewählt unter Styrol-Acrylnitril-Copolymeren (SAN), Acrylnitril-Butadien-Styrol-Copolymeren (ABS), Styrol-Butadien-Copolymeren (SB), Polyethylen (HTPE (high-temperature-polyethylene), LTPE (lowtemperature-polyethylene)), Polypropylen, Polybuten-1, Polytetrafluoroethylen, Polyethylenterephthalat (PET), Polyamiden, Polyethylenglykol (PEG), Polypropylenglykol, Polyethersulfonen (PESU oder PES), Polyvinylchlorid, Polyvinylidenchloriden, Polystyrol, schlagzäh-modifiziertes Polystyrol, Polyvinylcarbazol, Polyvinylacetat, Polyvinylalkohol, Polyisobutylen, Polybutadien, Polysulfon, und deren Mischungen. Diese dienen zum Beispiel zur Verbesserung der Produkteigenschaften, Verträglichkeiten der Komponenten und Viskosität.

In einer geeigneten Ausführungsform enthält die in Schritt a) bereitgestellte polymerisierbare Zusammensetzung mindestens einen Füllstoff und/oder Faserstoff. Die Begriffe "Füllstoff" und "Faserstoff" werden im Rahmen der Erfindung breit verstanden und umfassen z. B. partikulare Füllstoffe, Faserstoffe und beliebige Übergangsformen. Partikuläre Füllstoffe können eine weite Bandbreite von Teilchengrößen aufweisen, die von staubförmigen bis grobkörnigen Partikeln reichen. Als Füllmaterial kommen organische oder anorganische Füll- und/oder Faserstoffe in Frage. Beispielsweise können anorganische Füllstoffe, wie Kaolin, Kreide, Wollastonit, Talkum, Calciumcarbonat, Silikate, Titandioxid, Zinkoxid, Graphit, Glaspartikel, z. B. Glaskugeln, nanoskalige Füllstoffe, wie Kohlenstoff-Nanoröhren, Carbon black, nanoskalige Schichtsilikate, nanoskaliges Aluminiumoxid (Al₂O₃), nanoskaliges Titandioxid (TiO₂), Carbon nanotubes, Graphen, Schichtsilikate und nanoskaliges Siliciumdioxid (SiO₂), eingesetzt werden.

Weiterhin können ein oder mehrere Faserstoffe zum Einsatz kommen. Diese sind vorzugsweise ausgewählt aus bekannten anorganischen Verstärkungsfasern, wie Borfasern, Glasfasern, Kohlenstofffasern, Kieselsäurefasern, Keramikfasern und Basaltfasern; organischen Verstärkungsfasern, wie Aramidfasern, Polyesterfasern, Nylonfasern, Polyethylenfasern und Naturfasern, wie Holzfasern, Flachsfasern, Hanffasern und Sisalfasern.

Insbesondere bevorzugt ist der Einsatz von Glasfasern, Kohlenstofffasern, Aramidfasern, Borfasern, Metallfasern oder Kaliumtitanatfasern. Speziell werden Schnittglasfasern eingesetzt. Die genannten Fasern werden in der polymerisierbaren Zusammensetzung bevorzugt in Form von Kurzfasern eingesetzt. Hierbei weisen die Kurzfasern vorzugsweise eine mittlere Faserlänge im Bereich von 0,1 bis 0,4 mm auf. Es ist auch möglich, dass Faserstoffe in Form von Langfasern oder Endlosfasern eingesetzt werden. Der Einsatz dieser Fasermaterialien erfolgt jedoch im Allgemeinen nicht in der in Schritt a) bereitgestellten polymerisierbaren Zusammensetzung, sondern nur in Form des zur Herstellung der erfindungsgemäßen faserverstärkten Verbundwerkstoffs eingesetzten Fasermaterials.

Insbesondere können auch Mischungen der genannten Füll- und/oder Faserstoffe eingesetzt werden. Besonders bevorzugt werden als Füll- und/oder Faserstoff Glasfasern und/oder Glaspartikel, insbesondere Glaskugeln, eingesetzt.

Die erfindungsgemäß in Schritt a) bereitgestellte polymerisierbare Zusammensetzung enthält bevorzugt 0 bis 90 Gew.-%, insbesondere von 1 bis 80 Gew.-%, bezogen auf das Gesamtgewicht der polymerisierbaren Zusammensetzung, an mindestens einem Füll- und/oder Faserstoff. In einer speziellen Ausführungsform enthält die erfindungsgemäß eingesetzte polymerisierbare Zusammensetzung 30 bis 50 Gew.-%, bezogen auf das Gesamtgewicht der polymerisierbaren Zusammensetzung an mindestens einem Füll- und/oder Faserstoff. In einer weiteren speziellen Ausführungsform enthält die erfindungsgemäß eingesetzte polymerisierbare Zusammensetzung 50 bis 90 Gew.-%, bezogen auf das Gesamtgewicht der polymerisierbaren Zusammensetzung an mindestens einem Füll- und/oder Faserstoff.

Insbesondere enthält die in Schritt a) bereitgestellte polymerisierbare Zusammensetzung keine Füllstoffe und keine Faserstoffe.

In einer bevorzugten Ausführungsform kann die in Schritt a) bereitgestellte polymerisierbare Zusammensetzung wenigstens einen weiteren Zusatzstoff enthalten. Bevorzugt sind die Zusatzstoffe in einer Menge von 0 bis 5 Gew.-%, bezogen auf das Gesamtgewicht der polymerisierbaren Zusammensetzung, bevorzugt von 0 bis 4 Gew.-%, bezogen auf das Gesamtgewicht der polymerisierbaren Zusammensetzung, besonders bevorzugt von 0 bis 3,5 Gew.-%, bezogen auf das Gesamtgewicht der polymerisierbaren Zusammensetzung. Als Zusatzstoffe können beispielsweise Stabilisatoren, wie Kupfersalze, Farbstoffe, Antistatika, Trennmittel, Antioxidantien, Lichtstabilisatoren, PVC-Stabilisatoren, Gleitmittel, Flammschutzmittel, Treibmittel, Schlagzähigkeitsverbesserer, Nukleierungsmittel und Kombinationen zugesetzt werden. Wenn die polymerisierbare Zusammensetzung wenigstens einen Zusatzstoff enthält, so vorzugsweise in einer Menge von wenigstens 0,01 Gew.-%, bezogen auf das Gesamtgewicht der polymerisierbaren Zusammensetzung, besonders bevorzugt von wenigstens 0,1 Gew.-%, bezogen auf das Gesamtgewicht der polymerisierbaren Zusammensetzung, insbesondere von wenigstens 0,5 Gew.-%, bezogen auf das Gesamtgewicht der polymerisierbaren Zusammensetzung.

Bevorzugt enthält die erfindungsgemäß eingesetzte polymerisierbare Zusammensetzung als Zusatzstoff einen Schlagzähigkeitsverbesserer. Wird als Schlagzähigkeitsverbesserer eine polymere Verbindung eingesetzt, so wird diese den zuvor genannten Polymeren zugerechnet. Insbesondere wird als Schlagzähigkeitsverbesserer ein Polydien-Polymer (z. B. Polybutadien, Polyisopren) eingesetzt. Diese enthalten bevorzugt Anhydrid- und/oder Epoxigruppen. Das Polydien-Polymer weist insbesondere eine Glasübergangstemperatur unter 0 °C, bevorzugt unter -10 °C, besonders bevorzugt unter -20 °C auf. Das Polydien-Polymer kann auf der Basis eines Polydien-Copolymers mit Polyacrylaten, Polyethylenacrylaten und/oder Polysiloxanen basieren und mittels der gängigen Verfahren hergestellt werden (z. B. Emulsionspolymerisation, Suspensionspolymerisation, Lösungspolymerisation, Gasphasenpolymerisation).

Vorzugsweise erfolgt die Bereitstellung der festen polymerisierbaren Zusammensetzung in Schritt a) kontinuierlich.

Vorzugsweise werden zur Bereitstellung der festen polymerisierbaren Zusammensetzung in Schritt a) die Komponenten A), B) und C) bei erhöhter Temperatur in flüssiger Form vereinigt, die vereinigten Komponenten vermischt und anschließend die Mischung durch Abkühlen verfestigt.

Die in Schritt a) bereitgestellte polymerisierbare Zusammensetzung kann zusätzlich zu den Komponenten A), B) und C) weitere Komponenten enthalten. Bezüglich geeigneter und bevorzugter weiterer Komponenten wird auf die vorherigen Ausführungen zu diesen Komponenten Bezug genommen. Zum Überführen in die flüssige Phase werden die Komponenten A), B) und C) auf eine Temperatur erwärmt, die gleich oder größer ist als der Schmelzpunkt einer Mischung, die nur aus den Komponenten A), B) und C) besteht. Auch wenn die in Schritt a) bereitgestellte polymerisierbare Zusammensetzung zusätzlich zu den Komponenten A), B) und C) weitere Komponenten enthält, wird so sichergestellt, dass in dem erhaltenen Gemisch die Komponenten A), B) und C) im Wesentlichen homogen verteilt sind.

In einer speziellen Aufführungsform besteht die in Schritt a) bereitgestellte feste polymerisierbare Zusammensetzung nur aus den Komponenten A), B) und C). Im Sinne der Erfindung kann eine Zusammensetzung, die nur aus den Komponenten A), B) und C) besteht, übliche herstellungsbedingte Komponenten in den üblichen Mengen enthalten. Dazu zählen z. B. polymere Komponenten der eingesetzten Monomere und übliche Verunreinigungen. Ausgeschlossen ist jedoch die bewusste Zugabe von weiteren Komponenten, die von den Komponenten A), B) und C) verschieden sind. Dazu zählen z. B. die zuvor genannten Füllstoffe, Faserstoffe, etc.

Die Zeit von der Bildung des vereinigten Gemischs aus den Komponenten A), B) und C) bis zur Verfestigung beträgt vorzugsweise höchstens 10 Minuten, bevorzugt höchstens 5 Minuten, insbesondere höchstens 1 Minute.

Die Zeit von der Bildung des vereinigten Gemischs aus den Komponenten A), B) und C) bis zur Verfestigung beträgt vorzugsweise 1 Millisekunde bis 10 Minuten, bevorzugt 2 Millisekunden bis 5 Minuten, insbesondere 5 Millisekunden bis 1 Minute.

Die Temperatur des vereinigten Gemischs aus den Komponenten A), B) und C) liegt bevorzugt höchstens 20 °C, besonders bevorzugt höchstens 10 °C, insbesondere höchstens 5 °C, speziell höchstens 1 °C oberhalb des Schmelzpunkts dieses Gemischs.

Durch die zuvor beschriebenen Maßnahmen kann sichergestellt werden, dass das Lactam A) und, falls vorhanden, weitere Monomere (M), im Wesentlichen nicht polymerisieren. Bevorzugt beträgt der Reaktionsumsatz des Lactams A) und, falls vorhanden, weiterer Monomere (M), während der Zeit von der Bildung des vereinigten Gemischs aus den Komponenten A), B) und C) bis zur Verfestigung 0 bis 50 %, besonders bevorzugt 0 bis 30 %, insbesondere 0 bis 15 %.

In einer bevorzugten Ausführungsform des erfindungsgemäßen Verfahrens werden zur Bereitstellung der polymerisierbaren Zusammensetzung in Schritt a)
- die Komponenten A), B) und C) separat aufgeschmolzen und vereinigt oder
- eine erste Schmelze aus dem Katalysator B) und mindestens einem Lactam A), eine zweite Schmelze aus dem Aktivator C) und mindestens einem Lactam A), und gegebenenfalls zusätzlich eine dritte Schmelze aus mindestens einem Lactam A) vereinigt,
die vereinigten Komponenten vermischt und anschließend die Mischung durch Abkühlen verfestigt.

Das Vermischen der Komponenten kann diskontinuierlich oder kontinuierlich erfolgen. Geeignete Vorrichtungen zum Vermischen der Komponenten sind dem Fachmann bekannt. Dazu zählen z. B. Rührkessel, Kneter oder Extruder. Die Mischvorrichtung ist vorzugsweise temperierbar. Das Vermischen der Komponenten kann beispielsweise kontinuierlich und/oder diskontinuierlich in einem Rührkessel erfolgen. Das Vermischen der Komponenten kann beispielsweise kontinuierlich in einem Extruder erfolgen.

Nach dem Vermischen der Komponenten erfolgt bevorzugt ein möglichst rasches Abkühlen des Gemischs. Insbesondere erfolgt das Abkühlen der erhaltenen Mischung auf eine Temperatur im Bereich von 100 °C unterhalb des Schmelzpunkts des Gemischs bis 10 °C, bevorzugt 30 °C, unterhalb des Schmelzpunkts des Gemischs innerhalb einer Zeitspanne im Bereich von einer Millisekunde bis zehn Minuten, bevorzugt im Bereich von einer Millisekunde bis fünf Minuten, besonders bevorzugt im Bereich von einer Millisekunde bis einer Minute, ganz besonders bevorzugt im Bereich von einer Millisekunde bis zehn Sekunden. Das Abkühlen der Mischung kann insbesondere durch einen kalten Gasstrom (z. B. einem Stickstoffgasstrom von 0 °C) oder ein so genanntes "Cold-Disk-Verfahren" erfolgen.

Die in Schritt a) des erfindungsgemäßen Verfahrens bereitgestellte feste polymerisierbare Zusammensetzung kann Partikel beliebiger Größe und Gestalt enthalten. Bevorzugt haben die Partikel kugelförmige oder nahezu kugelförmige Gestalt (so genannte Prills). Sie können jedoch auch die Gestalt von Pulverpartikeln, Schuppen oder so genannten Pellets haben.

Die in Schritt a) bereitgestellte polymerisierbare Zusammensetzung liegt vorzugsweise in Form von Partikeln vor. Die Partikel weisen in der Regel einen mittleren Durchmesser von 1 bis 2000 µm, vorzugsweise 10 bis 1000 µm, besonders bevorzugt von 50 bis 500 µm, ganz besonders bevorzugt von 100 bis 200 µm, auf. Dabei kann der mittlere Durchmesser durch Lichtstreuung oder durch Siebfraktionen bestimmt werden und bedeutet den volumengemittelten mittleren Durchmesser.

In einer bevorzugten Ausführungsform von Schritt a) des erfindungsgemäßen Verfahrens wird die flüssige Mischung der Komponenten A), B) und C) nach bekannten Verfahren zu Granulaten oder Schuppen verfestigt.

In einer weiteren bevorzugten Ausführungsform von Schritt a) des erfindungsgemäßen Verfahrens wird die flüssige Mischung der Komponenten A), B) und C) nach bekannten Pelletierverfahren zu Pellets geformt.

In einer insbesondere bevorzugten Ausführungsform von Schritt a) des erfindungsgemäßen Verfahrens wird die flüssige Mischung der Komponenten A), B) und C) in diskrete Tropfen überführt und diese anschließend verfestigt. Dazu kann die flüssige Mischung der Komponenten A), B) und C) z. B. über eine Düse in einen Behälter versprüht oder vertropft werden. Die Abkühlung und die Erstarrung des Gemisches in Tropfenform (d. h. zu kugelförmigen Partikeln) erfolgt im Allgemeinen während des Fallens der Tropfen im Behälter. Dazu weist der Behälter eine Temperatur unterhalb der Schmelztemperatur der Mischung der Komponenten A), B) und C) auf. Zusätzlich kann der Behälter von einem Gasstrom als Kühlmedium durchströmt werden. In einer weiteren geeigneten Ausführung befindet sich am unteren Ende des Fallrohrs ein mit einer geeigneten Kühlflüssigkeit gefülltes Bad.

In einer besonders bevorzugten Ausführungsform von Schritt a) des erfindungsgemäßen Verfahrens wird die flüssige Mischung der Komponenten A), B) und C) in einem Prillverfahren in die Tropfenform überführt und zu kugelförmigen Partikeln verfestigt. Dabei wird das gesamte Verfahren so geführt, dass die Verweilzeit der vereinigten Komponenten A), B) und C) in der flüssigen Phase, d. h. bis zur Verfestigung durch Prillherstellung, möglichst gering gehalten wird. Verfahren und Vorrichtungen zum Prillen sind grundsätzlich bekannt und z. B. in der DE102007032778A1 beschrieben. Eine geeignete Prillvorrichtung weist z. B. wenigstens zwei Schmelzebehälter, Überführen der Komponenten A), B) und C) in den flüssigen Zustand, einen Tropfenerzeuger zum Ausbilden von Tropfen aus dem geschmolzenen Material, ein Fallrohr und eine Kühleinrichtung auf. Vorzugsweise wird zumindest eine der Komponenten separat in den flüssigen Zustand überführt, d. h. die flüssige Mischung aller drei Komponenten A), B) und C) wird erst unmittelbar vor Eintritt in den Tropfenerzeuger hergestellt.

In einer weiteren bevorzugten Ausführungsform von Schritt a) des erfindungsgemäßen Verfahrens wird die flüssige Mischung der Komponenten A), B) und C) in einem Apparat, der auch zur Sprühtrocknung geeignet ist, in die Tropfenform überführt und zu kugelförmigen Partikeln verfestigt. Derartige Apparate werden beispielsweise in K. Masters, Spray Drying Handbook, 5th Edition, Longman, 1991, S. 23-66, beschrieben.

Vorzugsweise wird zur Herstellung der partikelförmigen festen polymerisierbaren Zusammensetzung eine Vorrichtung eingesetzt, deren Vorlagen und Dosierleitungen temperiert sind.

Über die Verweilzeit zwischen der Einmischstelle, ab der das reaktionsfähige Gemisch vorliegt, und der Düse, sowie die Temperaturführung auf der Verweilzeitstrecke, kann der Reaktionsumsatz vor dem Überführen in die Tropfenform zwischen 0 bis 50 %, bevorzugt 0 bis 30 %, besonders bevorzugt 0 bis 10 %, eingestellt werden.

Im erfindungsgemäßen Verfahren können eine oder mehrere Sprühdüsen eingesetzt werden. Die einsetzbaren Sprühdüsen unterliegen keiner Beschränkung. Derartigen Düsen kann die zu versprühende Flüssigkeit unter Druck zugeführt werden. Die Zerteilung der zu versprühenden Flüssigkeit kann dabei dadurch erfolgen, dass sie nach Erreichen einer bestimmten Mindestgeschwindigkeit in der Düsenbohrung entspannt wird. Ferner können für den erfindungsgemäßen Zweck auch Einstoffdüsen, wie beispielsweise Schlitzdüsen oder Drallkammern (Vollkegeldüsen), verwendet werden (beispielsweise von Düsen-Schlick GmbH, DE, oder von Spraying Systems Deutschland GmbH, DE).

Der Durchsatz je Sprühdüse beträgt zweckmäßig 0,1 bis 10 m³/h, häufig 0,5 bis 5 m³/h.

Das Verfahren kann auch in Apparaten durchgeführt werden, in denen das reaktionsfähige Gemisch in Form monodisperser Tropfen frei fallen kann. Geeignet dazu sind Apparaturen, wie sie beispielsweise in US 5,269,980 beschrieben sind.

Eine Tropfenerzeugung durch laminaren Strahlzerfall, wie in Rev. Sci. Instr. 38 (1967) 502 beschrieben, ist ebenfalls möglich.

Die Tropfen können aber auch mittels pneumatischer Ziehdüsen, Rotation, Zerschneiden eines Strahls oder schnell ansteuerbarer Mikroventildüsen erzeugt werden.

In einer pneumatischen Ziehdüse wird ein Flüssigkeitsstrahl zusammen mit einem Gasstrom durch eine Blende beschleunigt. Über die Gasmenge kann der Durchmesser des Flüssigkeitsstrahls und damit der Tropfendurchmesser beeinflusst werden.

Bei der Tropfenerzeugung durch Rotation tritt die Flüssigkeit durch die Öffnungen einer rotierenden Scheibe. Durch die auf die Flüssigkeit wirkende Fliehkraft werden Tropfen definierter Größe abgerissen. Bevorzugte Vorrichtungen zur Rotationsvertropfung werden beispielsweise in DE 43 08 842 A1 beschrieben.

Der austretende Flüssigkeitsstrahl kann aber auch mittels eines rotierenden Messers in definierte Segmente zerschnitten werden. Jedes Segment bildet anschließend einen Tropfen.

Bei Verwendung von Mikroventildüsen werden direkt Tropfen mit definiertem Flüssigkeitsvolumen erzeugt.

Die erzeugten diskreten Tropfen weisen in der Regel einen mittleren Durchmesser von 1 bis 2000 µm, vorzugsweise 10 bis 1.000 µm, besonders bevorzugt von 50 bis 500 µm, ganz besonders bevorzugt von 100 bis 200 µm, auf, wobei der Tropfendurchmesser durch Lichtstreuung bestimmt werden kann und den volumengemittelten mittleren Durchmesser bedeutet.

Der Behälter, in dem die Tropfen verfestigt werden, kann von einem Gas durchströmt werden. Dabei kann das Trägergas im Gleichstrom oder im Gegenstrom zu den frei fallenden Tropfen des Monomergemischs durch den Reaktionsraum geführt werden, bevorzugt im Gleichstrom, d. h. von oben nach unten. Vorzugsweise wird das Gas nach einem Durchgang zumindest teilweise, bevorzugt zu mindestens 50 %, besonders bevorzugt zu mindestens 75 %, als Kreisgas in den Reaktionsraum zurückgeführt. Üblicherweise wird eine Teilmenge des Trägergases nach jedem Durchgang ausgeschleust, vorzugsweise bis zu 10 %, besonders bevorzugt bis zu 3 %, ganz besonders bevorzugt bis zu 1 %.

Der Sauerstoffgehalt des Trägergases beträgt vorzugsweise maximal 15 Vol.-%, besonders bevorzugt maximal 5 Vol.-%, ganz besonders bevorzugt maximal 0,1 Vol.-%.

Das Trägergas enthält neben Sauerstoff vorzugsweise ein Inertgas, besonders bevorzugt Stickstoff. Der Inertgasgehalt des Trägergases beträgt vorzugsweise mindestens 80 Vol.-%, besonders bevorzugt mindestens 90 Vol.-%, ganz besonders bevorzugt mindestens 95 Vol.-%.

Die Gasgeschwindigkeit wird vorzugsweise so eingestellt, dass die Strömung im Reaktor gerichtet ist, beispielsweise liegen keine der allgemeinen Strömungsrichtung entgegen gesetzte Konvektionswirbel vor, und beträgt beispielsweise 0,01 bis 5 m/s, vorzugsweise 0,02 bis 4 m/s, besonders bevorzugt 0,05 bis 3 m/s, ganz besonders bevorzugt 0,1 bis 2 m/s.

Die Reaktion kann im Überdruck oder im Unterdruck durchgeführt werden, ein Überdruck von bis zu 100 mbar gegenüber dem Umgebungsdruck ist bevorzugt.

In einer bevorzugten Ausführungsform umfasst die Bereitstellung der polymerisierbaren Zusammensetzung in Schritt a) die folgenden Schritte:
a1) Vermischen der Komponenten A), B) und C) und gegebenenfalls wenigstens einer weiteren Komponente bei einer Temperatur, die gleich oder größer ist als der Schmelzpunkt einer Mischung, die nur aus den Komponenten A), B) und C) besteht,
a2) Überführen des Gemischs in Tropfenform,
a3) Abkühlen der in Schritt a2) erhaltenen Tropfen auf eine Temperatur von wenigstens 10 °C unterhalb des Schmelzpunkts des Gemischs;
a4) gegebenenfalls Granulieren der abgekühlten Mischung.

Bezüglich geeigneter und bevorzugter Ausführungsformen der Schritte a1) bis a4) wird auf die vorherigen Ausführungen zu diesen Verfahrensmaßnahmen Bezug genommen.

### Schritt b)

In Schritt b) des erfindungsgemäßen Verfahrens wird die in Schritt a) bereitgestellte polymerisierbare Zusammensetzung in fester, rieselfähiger Form auf ein Fasermaterial aufgetragen.

Bevorzugt wird in Schritt b) ein Fasermaterial eingesetzt, das Endlosfasern enthält oder aus Endlosfasern besteht.

Bevorzugt ist das in Schritt b) eingesetzte Fasermaterial ausgewählt unter Faserbündeln, Geweben, Gewirken, Gestricken, Gelegen oder Vliesen aus Endlosfasern.

Bevorzugt werden parallelfaserige Faserbündel eingesetzt. Harzgetränkte Faserbündel werden auch als "Rovings" bezeichnet. Fasermaterialien aus der Konsolidierung von parallelfaserigen Faserbündeln, in denen die Fasern im Wesentlichen unidirektional angeordnet sind, werden auch als "Tapes" bezeichnet.

Geeignete Fasermaterialien sind einlagige oder mehrlagige Gewebe, einlagige oder mehrlagige Gestricke, einlagige oder mehrlagige Gewirke, einlagige oder mehrlagige Geflechte, einlagige oder mehrlagige Gelege, oder einlagige oder mehrlagige Vliese.

Geeignete Gelege weisen mindestens eine Lage, bevorzugt mehrere Lagen, aus parallel ausgerichteten Fasern, Garnen, Zwirnen oder Seilen auf, wobei die einzelnen Lagen der parallel ausgerichteten Fasern, Garne, Zwirne oder Seile zueinander gedreht sein können.

Bevorzugt liegen die Fasermaterialien als Gewebe oder in Form von Gelegen aus Lagen parallel ausgerichteter Fasern, Garne, Zwirne oder Seile vor.

Bevorzugt werden Gewebe eingesetzt, die aus zwei oder mehr als zwei Lagen bestehen.

Wenn bei Gelegen die Lagen parallel ausgerichteter Fasern, Garne, Zwirne oder Seile gedreht zueinander eingesetzt werden, sind die einzelnen Lagen besonders bevorzugt jeweils um einen Winkel von 90° zueinander gedreht (bidirektionaler Aufbau). Bei Einsatz von drei Lagen oder eines Vielfachen von drei Lagen ist es auch möglich, die einzelnen Lagen um einen Winkel von 60° zueinander gedreht anzuordnen und bei vier Lagen oder Vielfachen von vier Lagen um einen Winkel von 45° zueinander gedreht. Weiterhin ist es auch möglich, mehr als eine Lage an Fasern mit gleicher Ausrichtung vorzusehen. Hierbei können ebenfalls Lagen zueinander verdreht sein, wobei die Anzahl an Lagen mit Fasern gleicher Ausrichtung in jeder der Ausrichtungen der Fasern unterschiedlich sein kann, beispielsweise vier Lagen in einer ersten Richtung und eine Lage in einer dazu zum Beispiel um 90° gedrehten Richtung (bidirektionaler Aufbau mit Vorzugsrichtung). Weiterhin ist auch ein quasiisotroper Aufbau bekannt, bei dem die Fasern einer zweiten Lage um 90° gedreht zu Fasern einer ersten Lage angeordnet sind und weiterhin Fasern einer dritten Lage um 45° gedreht zu den Fasern der zweiten Lage.

Besonders bevorzugt werden zur Herstellung der faserverstärkten Verbundwerkstoffe Fasermaterialien mit 2 bis 10 Lagen, insbesondere in 2 bis 6 Lagen, eingesetzt.

Die eingesetzten Fasermaterialien enthalten als Fasern vorzugsweise solche aus anorganischen Mineralien wie Kohlenstoff, beispielsweise als Niedermodulcarbonfasern oder Hochmodulcarbonfasern, silikatische und nicht silikatische Gläser der verschiedensten Art, Bor, Siliciumcarbid, Kaliumtitanat, Metalle, Metalllegierungen, Metalloxide, Metallnitride, Metallcarbide und Silikate, sowie organische Materialien wie natürliche und synthetische Polymere, beispielsweise Polyacrylnitrile, Polyester, ultrahochgereckte Polyolefinfasern, Polyamide, Polyimide, Aramide, Flüssigkristallpolymere, Polyphenylensulfide, Polyetherketone, Polyetheretherketone, Polyetherimide, Baumwolle, Cellulose und andere Naturfasern, beispielsweise Flachs, Sisal, Kenaf, Hanf, Abaca. Bevorzugt sind hochschmelzende Materialien, beispielsweise Gläser, Kohlenstoff, Aramide, Kaliumtitanat, Flüssigkristallpolymere, Polyphenylensulfide, Polyetherketone, Polyetheretherketone und Polyetherimide, besonders bevorzugt sind Glasfasern, Kohlenstofffasern, Aramidfasern, Stahlfasern, Kaliumtitanatfasern, Keramikfasern und/oder sonstige hinreichend temperaturbeständige polymere Fasern oder Fäden.

Das Auftragen der festen polymerisierbaren Zusammensetzung auf das Fasermaterial erfolgt vorzugsweise durch ein Streuverfahren, insbesondere ein kontinuierliches Streuverfahren. Geeignete Vorrichtungen zum Streuen sind Dosierwalzen, Vibrationsrinnen und Windstreuverfahren. Solche Verfahren werden in M. Ostgathe et al., Organobleche aus Thermoplastpulver, Kunststoffe, 1996, 86(12), S. 1838-1840 beschrieben, worauf hier in vollem Umfang Bezug genommen wird. Ein Verfahren zur kontinuierlichen Herstellung von Organoblechen mit Hilfe einer Streueinrichtung ist in K. Spindler, Kontinuierliches Streuen und Verpressen, Kunststoffe, 1995, 85(9), S. 1364-1368 beschrieben, worauf hier ebenfalls in vollem Umfang Bezug genommen wird.

In einer speziellen Ausführungsform wird das in Schritt b) bereitgestellte Fasermaterial vor dem Auftragen der polymerisierbaren Zusammensetzung einer Vorerwärmung unterzogen. Diese Vorerwärmung erfolgt vorzugsweise auf eine Temperatur, bei der die Mischung aus den Komponenten A), B) und C) zumindest oberflächig anschmilzt. Somit wird die Haftung auf dem Fasermaterial verbessert.

### Schritt c)

In Schritt c) des erfindungsgemäßen Verfahrens wird das in Schritt b) erhaltene Fasermaterial mit der aufgetragenen polymerisierbaren Zusammensetzung einer Behandlung unter erhöhtem Druck und bei einer Temperatur unterzogen, bei der die Mischung aus den Komponenten A), B) und C) fließfähig ist, wobei diese das Fasermaterial umschließt und durchdringt. Dabei dringen die die Polymermatrix bildenden Komponenten in die Faserzwischenräume ein und benetzen die Verstärkungsfilamente. Die Behandlung unter erhöhtem Druck dient z. B. der Konsolidierung des Materialverbunds, verhindert oder vermindert die Bildung von Lufteinschlüssen und stellt eine gute Verbindung zwischen den einzelnen Verstärkungslagen her.

In Schritt c) können die Behandlung des Fasermaterials mit der aufgetragenen polymerisierbaren Zusammensetzung bei erhöhter Temperatur und die Behandlung unter erhöhtem Druck nacheinander, teilweise gleichzeitig oder vollständig gleichzeitig erfolgen. In einer ersten Ausführungsform wird das Fasermaterial mit der aufgetragenen polymerisierbaren Zusammensetzung gleichzeitig einer Behandlung bei erhöhter Temperatur und unter erhöhtem Druck unterzogen. In einer zweiten Ausführungsform wird das Fasermaterial mit der aufgetragenen polymerisierbaren Zusammensetzung zuerst einer Behandlung bei erhöhter Temperatur unterzogen, um die Mischung aus den Komponenten A), B) und C) in den fließfähigen Zustand zu überführen. Anschließend erfolgt dann eine Behandlung unter erhöhtem Druck. Bevorzugt erfolgt die anschließende Behandlung unter erhöhtem Druck, gleichzeitig auch unter erhöhter Temperatur.

In einer ersten bevorzugten Ausführungsform erfolgt die Behandlung in Schritt c) unter Bedingungen, unter denen das Lactam A) im Wesentlichen auspolymerisiert (Variante 1).

In dieser ersten Variante erfolgt die Behandlung in Schritt c) für eine ausreichende Zeit bei einer Temperatur oberhalb der Polymerisationstemperatur. Die für die Polymerisation erforderliche Temperatur und die erforderliche Reaktionszeit bei dieser Temperatur sind unter anderem abhängig vom eingesetzten Lactam A). Bevorzugt liegt die Temperatur in einem Bereich von 80 bis 250 °C, besonders bevorzugt in einem Bereich von 90 bis 200 °C, insbesondere in einem Bereich von 100 bis 170 °C. Insbesondere liegt die Temperatur für die Verwendung von Caprolactam als Lactamkomponente A) in einem Bereich von 85 bis 200 °C, insbesondere 90 bis 170 °C.

Bevorzugt weist das in Schritt c) erhaltene Produkt nach dieser ersten Variante einen Restgehalt an Lactam A) von höchstens 5 Gew.-%, besonders bevorzugt höchstens 2,5 Gew.-%, insbesondere höchstens 1 Gew.-%, bezogen auf das Gewicht des Lactams A) in der in Schritt a) eingesetzten polymerisierbaren Zusammensetzung, auf.

In einer zweiten bevorzugten Ausführungsform erfolgt die Behandlung in Schritt c) unter Bedingungen, unter denen das Lactam A) im Wesentlichen nicht auspolymerisiert (Variante 2).

In dieser zweiten Variante erfolgt die Behandlung in Schritt c) bevorzugt bei einer Temperatur von 1 bis 20 °C, besonders bevorzugt 3 bis 15 °C, insbesondere 5 bis 10 °C, oberhalb des Schmelzpunktes des Gemischs aus den Komponenten A), B) und C).

Bevorzugt weist das in Schritt c) erhaltene Produkt einen Anteil an polymeren Komponenten von höchstens 50 Gew.-%, besonders bevorzugt von höchstens 30 Gew.-%, insbesondere von höchstens 15 Gew.-%, bezogen auf das Gesamtgewicht der polymerisierbaren Verbindungen in der in Schritt a) eingesetzten festen polymerisierbaren Zusammensetzung auf. Polymerisierbare Verbindungen sind das Lactam A) und, falls vorhanden, die weiteren Monomere (M).

In einer speziellen Ausführungsform wird das in Schritt b) erhaltene Fasermaterial mit der aufgetragenen polymerisierbaren Zusammensetzung in Schritt c) zunächst einer Vorerwärmung unterzogen. Diese Vorerwärmung erfolgt vorzugsweise bei einer Temperatur, bei der die Mischung aus den Komponenten A), B) und C) fließfähig ist. Die zulässige Maximaltemperatur richtet sich danach, ob das Lactam A) in Schritt c) bereits einer Polymerisation unterzogen werden soll oder nicht. In einer speziellen Ausführungsform erfolgt die Vorerwärmung unter Bedingungen, bei der die Mischung aus den Komponenten A), B) und C) fließfähig ist, aber das Lactam A) im Wesentlichen nicht polymerisiert. Die Erwärmung kann nach üblichen, dem Fachmann bekannten Verfahren erfolgen, z. B. mit einem Wärmemedium beheizten Platten, durch Infrarotstrahler, etc. Bevorzugt wird eine Bahn des Fasermaterials mit der aufgetragenen polymerisierbaren Zusammensetzung kontinuierlich an der Heizvorrichtung vorbeigeführt.

Zur Behandlung des in Schritt b) erhaltenen Fasermaterials mit der aufgetragenen polymerisierbaren Zusammensetzung unter erhöhtem Druck eignen sich die dafür üblichen Pressen. Die Art der gewählten Vorrichtung richtet sich danach, ob die Druckbehandlung kontinuierlich oder diskontinuierlich erfolgen soll und ob das resultierende Produkt direkt einer Formgebung unterzogen werden soll. Geeignete diskontinuierlich arbeitende Pressen sind z. B. Etagenpressen, Autoklav-Pressen, etc. Bevorzugt erfolgt die Druckbehandlung in Schritt c) kontinuierlich. Geeignete kontinuierlich arbeitende Pressen sind z. B. Doppelbandpressen. Dazu zählen z. B. im Durchlaufverfahren kontinuierlich arbeitende Doppelbandpressen vom Typ ContiLam der Firma Kurt Held GmbH, Trossingen, Deutschland. Die Temperierung der Presse kann über in der Presse angebrachte Heiz- und Kühleinheiten erfolgen.

Der Druck bei der Behandlung in Schritt c) liegt vorzugsweise in einem Bereich von 5 bis 300 bar, besonders bevorzugt 7 bis 200 bar, insbesondere 10 bis 100 bar.

### Schritt d)

Erfindungsgemäß wird im Anschluss an Schritt c) das erhaltene Produkt abgekühlt (= Schritt d)). Dazu wird das Produkt in der Regel auf eine Temperatur gekühlt, bei der die in Schritt c) gebildete Matrix formstabil ist. Durch diese "Solidifikation" wird ein gebrauchsfähiger Verbundwerkstoff erhalten, der im Folgenden einer Weiterverarbeitung unterzogen werden kann. Das Produkt aus Schritt c) wird bevorzugt auf eine Temperatur von 0 bis 80 °C, besonders bevorzugt auf 10 bis 70 °C, insbesondere bevorzugt auf 20 bis 60 °C abgekühlt.

In einer geeigneten Ausführung wird das in Schritt c) erhaltene Produkt in der Pressvorrichtung einer Kühlung unterzogen. Dies kann durch geeignete Kühlvorrichtungen erfolgen, z. B. kann das Produkt mit wenigstens einer gekühlten Walze in Kontakt gebracht werden.

In einer weiteren geeigneten Ausführung wird das in Schritt c) erhaltene Produkt zur Abkühlung aus der Pressvorrichtung entfernt. In einer geeigneten Ausführung erfolgt die Abkühlung des Produkts durch Inkontaktbringen mit einem Kühlmedium, z. B. einem Gasstrom, der zusätzlich gekühlt sein kann. Geeignete Gase sind Luft, Inertgase oder Luft/Inertgas-Gemische. Der Kühlungsprozess ist beendet, wenn das Produkt formstabil ist. Danach kann dieses einer Weiterverarbeitung, wie im Folgenden beschrieben, unterzogen werden.

Durch das erfindungsgemäße Verfahren, das die Schritte a) bis d) umfasst, werden imprägnierte und konsolidierte faserverstärkte Verbundwerkstoffe erhalten, die thermisch nachverformbar sind. Sie können vollständig auspolymerisiert sein (Variante 1) oder noch polymerisierbares Lactam A) sowie Katalysator B) und Aktivator C) enthalten, die durch thermische Nachbehandlung polymerisieren (Variante 2). In jedem Falle werden so genannte "Halbzeuge" oder "Organobleche" erhalten, die sich vorteilhaft für eine Weiterverarbeitung zu faserverstärkten Polyamidbauteilen eignen.

Sofern das erhaltene Produkt noch polymerisierbares Lactam A) sowie Katalysator B) und Aktivator C) enthält, ist es aufgrund der Empfindlichkeit des Katalysators gegenüber Wasser vorteilhaft, das Halbzeug unter Ausschluss von Wasser, d. h. unter trockener Luft oder einem wasserfreien Inertgas, herzustellen und zu lagern oder es möglichst rasch weiterzuverarbeiten. Alternativ dazu kann das Halbzeug zur Verbesserung seiner Haltbarkeit in einer Folie eingeschweißt oder zumindest an Oberseite und Unterseite mit einer Folie bedeckt werden. Als Folie, in die das Halbzeug eingeschweißt wird, kann jede beliebige Folie, die wasserundurchlässig ist, eingesetzt werden. Bevorzugt werden Polyamidfolien oder Polyesterfolien eingesetzt. Wenn Folien aus einem Material eingesetzt werden, das verschieden ist von Polyamiden oder Polyestern, ist es im Allgemeinen notwendig, das Halbzeug vor der Weiterverarbeitung aus der Folie zu entnehmen. Bei Verwendung einer Polyamidfolie, gegebenenfalls auch bei Einsatz einer Polyesterfolie, kann das Halbzeug in der Regel mitsamt der Folie weiterverarbeitet werden und muss nicht entnommen werden.

### Schritt e)

Das in Schritt d) erhaltene Produkt kann vor seiner Umformung gegebenenfalls einer Konfektionierung unterzogen werden. Als Konfektionieren bezeichnet man im Sinne der Erfindung jegliche Art von Aufteilung, Längeneinteilung oder Festlegung anwendungsspezifischer Endstücke und Abmessungen. Die Konfektionierung kann nach dem Fachmann bekannten Verfahren, z. B. durch sägen, schneiden, fräsen, drehen, schleifen, bohren etc. erfolgen.

### Schritt f)

Das in Schritt d) erhaltene Produkt oder das in Schritt e) erhaltene konfektionierte Produkt kann gegebenenfalls einer Umformung unterzogen werden.

Geeignete Verfahren zum Umformen sind zum Beispiel Tiefziehverfahren oder Pressverfahren. Zur Herstellung eines Bauteils kann das in Schritt d) erhaltene Produkt oder das in Schritt e) erhaltene konfektionierte Produkt z. B. in eine Form eingelegt und geformt werden.

Sofern das zur Umformung eingesetzte Halbzeug noch polymerisierbares Lactam A) sowie Katalysator B) und Aktivator C) enthält, erfolgt die Umformung unter Bedingungen, unter denen das Lactam A), und, falls vorhanden, Monomere M) polymerisieren. Dazu kann z. B. die Form, in der das Halbzeug zu dem Bauteil geformt wird, auf eine Temperatur geheizt werden, bei der das Lactam zum Polyamid anionisch polymerisiert. Die Temperatur der Form liegt dabei vorzugsweise im Bereich von 100 bis 200 °C, mehr bevorzugt im Bereich von 120 bis 180 °C und insbesondere im Bereich von 140 bis 170 °C.

Mit Hilfe des erfindungsgemäßen Verfahrens ist es möglich, faserverstärkte Verbundwerkstoffe mit einem hohen Faseranteil und, falls vorhanden, Füllstoffanteil herzustellen. Insbesondere weist der nach dem erfindungsgemäßen Verfahren erhaltene faserverstärkte Verbundwerkstoff einen Anteil an Fasern und Füllstoffen im Bereich von 30 bis 90 Gew.-%, insbesondere von 40 bis 80 Gew.-%, bevorzugt 50 bis 75 Gew.-%, bezogen auf das Gesamtgewicht des faserverstärkten Verbundwerkstoffs auf. Speziell weist der faserverstärkte Verbundwerkstoff einen Anteil an Fasern und Füllstoffen im Bereich von 50 bis 90 Gew.-%, bezogen auf das Gesamtgewicht des faserverstärkten Verbundwerkstoffs, auf.

Die mit dem erfindungsgemäßen Verfahren hergestellten faserverstärkten Verbundwerkstoffe können insbesondere Anwendung finden als Material zur Herstellung von Teilen der Autokarosserie, z. B. Fahrgastzelle, Kotflügel, als auch von Autoteilen, wie Verkleidungen von Rahmen, Armaturenbrettern und für den Innenraum von Fahrgastzellen. Prinzipiell eignen sich die nach dem erfindungsgemäßen Verfahren hergestellten faserverstärkten Verbundwerkstoffe für jegliche Gehäuse für elektrische Kleingeräte, wie Mobiltelefone, Laptops, iPads oder allgemein Kunststoffartikel, die Metall imitieren sollen.

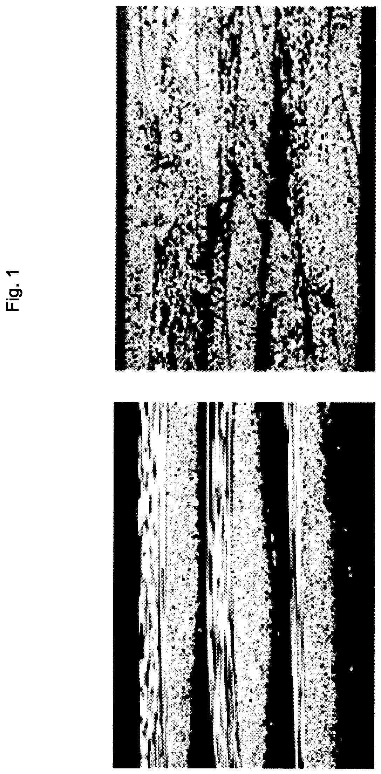

Die Erfindung wird durch die nachfolgenden nicht einschränkenden Beispiele und die Figur 1 näher erläutert.

### FIGURENBESCHREIBUNG

Die linke Aufnahme der Figur 1 zeigt einen transversalen Schnitt des faserverstärkten Verbundwerkstoffs des Vergleichsbeispiels 2, die rechte Aufnahme zeigt einen transversalen Schnitt des faserverstärkten Verbundwerkstoffs des erfindungsgemäßen Beispiels 2.

### BEISPIELE

### Beispiel 1

ε-Caprolactam wurde bei 85 °C mit einer Förderrate von 8,44 kg/h kontinuierlich mit einer Lösung, bestehend aus 95,2 Gewichtsprozent ε-Caprolactam und 4,8 Gewichtsprozent Natriumcaprolactamat, die mit einer Förderrate von 4,25 kg/h zugegeben wurde, in einem statischen Mischer vermischt. Diese Mischung wurde auf 80 °C temperiert. Nach kontinuierlicher Zugabe von 0,55 kg/h einer Lösung, bestehend aus 80 Gewichtsprozent N,N'-Hexamethylen-bis-(carbamoyl-ε-caprolactam) und 20 Gewichtsprozent Caprolactam wurde die entstandene Mischung in einen mit Stickstoff inertisierten Sprühturm (Prillturm) mittels Zweistoffdüse versprüht. Die Temperatur der Gasphase im Sprühturm betrug 25 °C. Es wurden Partikel mit einer durchschnittlichen Partikelgröße von 160 µm erhalten.

Eine Woche später wurde der so erhaltene geprillte Feststoff bei einer Produkttemperatur von 80 °C in einer Spritzgussmaschine, Arburg 270 S mit vertikaler Spritzeinheit, spritzgegossen. Das Temperaturprofil des Zylinders war 60/65/70/75 °C, Einspritzzeit 0,8 s, Nachdruckzeit 2 s. Die Schmelze wurde in eine auf 150 °C erhitzte Form injiziert. Danach wurde die Polymerisation 5 Minuten fortschreiten gelassen. Das erhaltene Polyamid-Formteil wurde aus dem Werkzeug entnommen.

Der Gehalt an Restmonomer (Caprolactam) des Polyamid-Produktes wurde chromatographisch bestimmt. Die Viskositätszahl des Polyamid-Produktes wurde gemäß der ISO 307 bei 5 °C in 96%iger Schwefelsäure bestimmt. Das erhaltene Polymer enthielt 1,1 Gew.-% Rest Caprolactam und wies eine Viskositätszahl von 320 auf.

### Beispiel 2

Das gemäß Beispiel 1 erhaltene feste geprillte Caprolactam wurde bei einer Temperatur von 23 °C auf eine Glasfasermatte (Gewebe SE4351 der Firma OCV in Köperbindung 2/2 50/50 mit einem Flächengewicht von 600 g/m² und einer längenbezogenen Masse von 1200 tex) appliziert (50 Volumen-%). Das Kompositmaterial wurde 3 Minuten in einer Presse der Firma Frimo bei 150 °C und einem Druck von 10 bar gepresst und anschließend das erhaltene Polyamid-Formteil aus dem Werkzeug entnommen.

Der erhaltene faserverstärkte Verbundwerkstoff enthielt 0,8 Gew.-% Rest-Caprolactam und wies eine Viskositätszahl von 350 auf.

### Beispiel 3

Das gemäß Beispiel 1 erhaltene feste geprillte Caprolactam wurde bei einer Temperatur von 23 °C auf eine Glasfasermatte (Gewebe SE4351 der Firma OCV in Köperbindung 2/2 50/50 mit einem Flächengewicht von 600 g/m² und einer längenbezogenen Masse von 1200 tex) appliziert (50 Volumen-%). Das Kompositmaterial wurde 2,5 Minuten mittels einer Doppelbandpresse der Firma Held, Typ Contilam, bei 150 °C und einem Druck von 20 bar mit einer Bahngeschwindigkeit von 0,5 m/min gepresst und anschließend das erhaltene Polyamid-Formteil aus dem Werkzeug entnommen.

Der erhaltene faserverstärkte Verbundwerkstoff wies 0,4 Gew.-% Rest-Caprolactam und eine Viskositätszahl von 320 auf.

### Beispiel 4

Das gemäß Beispiel 1 erhaltene feste geprillte Caprolactam wurde bei einer Temperatur von 23 °C auf eine Carbonfasermatte (Gewebe style 462 der Firma ECC-Cramer in Köperbindung 2/2 50/50 mit einem Flächengewicht von 245 g/m², beidseitig entschlichtet) appliziert (50 Volumen-%). Das Kompositmaterial wurde 2,5 Minuten mittels einer Doppelbandpresse der Firma Held, Typ Contilam, bei 150 °C und einem Druck von 20 bar mit einer Bahngeschwindigkeit von 0,5 m/min gepresst und anschließend das erhaltene Polyamid-Formteil aus dem Werkzeug entnommen.

Der erhaltene faserverstärkte Verbundwerkstoff enthielt 0,6 Gew.-% Rest-Caprolactam und wies eine Viskositätszahl von 350 auf.

### Beispiel 5

Das gemäß Beispiel 1 erhaltene feste geprillte Caprolactam wurde bei einer Temperatur von 23 °C auf eine Basaltfasermatte (Gewebe type 220.1270.T-22 der Firma Basaltex in Köperbindung 2/2 50/50 mit einem Flächengewicht von 225 g/m²) appliziert (50 Volumen-%). Das Kompositmaterial wurde 2,5 Minuten mittels einer Doppelbandpresse der Firma Held, Typ Contilam, bei 160 °C und einem Druck von 20 bar mit einer Bahngeschwindigkeit von 0,5 m/min gepresst und anschließend das erhaltene Polyamid-Formteilaus dem Werkzeug entnommen.

Der erhaltene faserverstärkte Verbundwerkstoff enthielt 0,7 Gew.-% Rest-Caprolactam und wies eine Viskositätszahl von 290 auf.

### Beispiel 6

Das gemäß Beispiel 1 erhaltene feste geprillte Caprolactam wurde bei einer Temperatur von 73 °C auf eine Glasfasermatte (Gewebe SE4351 der Firma OCV in Köperbindung 2/2 50/50 mit einem Flächengewicht von 600 g/m² und einer längenbezogenen Masse von 1200 tex) appliziert (50 Volumen-%). Das Kompositmaterial wurde 2,5 Minuten mittels einer Doppelbandpresse der Firma Held, Typ Contilam, bei 150 °C und einem Druck von 20 bar mit einer Bahngeschwindigkeit von 0,5 m/min gepresst und anschließend das erhaltene Polyamid-Formteil aus dem Werkzeug entnommen.

Der erhaltene faserverstärkte Verbundwerkstoff wies 0,5 Gew.-% Rest-Caprolactam und eine Viskositätszahl von 310 auf.

### Vergleichsbeispiel 1 (bei erhöhter Temperatur und erhöhtem Druck)

Ein kommerzielles PA-Pulver der Firma BASF wurde bei einer Produkttemperatur von 23 °C auf eine Glasfasermatte (Gewebe Köper 2/2 50/50 mit einem Flächengewicht von 600 g/m² und einer längenbezogenen Masse von 1200 tex) appliziert (50 Volumen-%). Das Kompositmaterial wurde mittels einer Doppelbandpresse der Firma Held, Typ Contilam, bei 280 °C und einem Druck von 50 bar mit einer Geschwindigkeit von 0,5 m/min gepresst, wobei die Verweilzeitzeit des Kompostes in der Presse bei 2,5 Minuten liegt. Das erhaltene Polyamid-Formteil wurde aus dem Werkzeug entnommen.

### Vergleichsbeispiel 2:

Ein kommerzielles Polyamid-Pulver der Firma BASF wurde bei einer Produkttemperatur von 23 °C auf eine Glasfasermatte (Gewebe SE4351 der Firma OCV in Köperbindung 2/2 50/50 mit einem Flächengewicht von 600 g/m² und einer längenbezogenen Masse von 1200 tex) appliziert und vorimprägniert (50 Volumen-%). Das Kompositmaterial wurde 10 Minuten in einer Presse der Firma Frimo bei 295 °C und einem Druck von 50 bar gepresst und anschließend das erhaltene Polyamid-Formteil aus dem Werkzeug entnommen.

Die linke Aufnahme der Figur 1 zeigt einen transversalen Schnitt des faserverstärkten Verbundwerkstoffs des Vergleichsbeispiels 2, die Aufnahme rechts einen transversalen Schnitt des faserverstärkten Verbundwerkstoffs des erfindungsgemäßen Beispiels 2. Die rechte Aufnahme zeigt eine deutlich bessere Imprägnierung der Fasern. Die einzelnen Faserbündel wurden vollständig imprägniert, was eine deutlich bessere Homogenität des Polymers im Verbundwerkstoff erzeugt. Damit konnten die mechanischen Eigenschaften, speziell die Festigkeit und die Zähigkeit, deutlich verbessert werden.

Die noch vorhandenen Poren können durch Evakuierung des Caprolactams deutlich verringert werden, was aber kaum Einfluss auf die mechanischen Eigenschaften hat.

## Patentansprüche

1. Verfahren zur Herstellung eines faserverstärkten Verbundwerkstoffs mit einer Polyamidmatrix, bei dem man
a) eine feste polymerisierbare Zusammensetzung bereitstellt, die
A) mindestens ein Lactam,
B) mindestens einen Katalysator, und
C) mindestens einen Aktivator, der ausgewählt ist unter Isocyanaten, Säureanhydriden, Säurehalogeniden, deren Umsetzungsprodukten mit A) und deren Mischungen,
umfasst,
b) die in Schritt a) bereitgestellte polymerisierbare Zusammensetzung in fester, rieselfähiger Form auf ein Fasermaterial aufträgt,
c) das in Schritt b) erhaltene Fasermaterial mit der aufgetragenen polymerisierbaren Zusammensetzung einer Behandlung unter erhöhtem Druck und bei einer Temperatur unterzieht, bei der die Mischung aus den Komponenten A), B) und C) fließfähig ist, wobei diese das Fasermaterial umschließt und durchdringt,
d) das in Schritt c) erhaltene Produkt abkühlt.

2. Verfahren nach Anspruch 1, bei dem man zusätzlich
e) das in Schritt d) erhaltene Produkt einer Konfektionierung unterzieht.

3. Verfahren nach einem der Ansprüche 1 oder 2, bei dem man zusätzlich
f) das in Schritt d) erhaltene Produkt oder das in Schritt e) erhaltene, konfektionierte Produkt einer Umformung unterzieht.

4. Verfahren nach einem der vorherigen Ansprüche, wobei die in Schritt a) bereitgestellte polymerisierbare Zusammensetzung
50 bis 99,7 Gewichtsteile mindestens eines Lactams A),
0,1 bis 3,6 Gewichtsteile mindestens eines Katalysators B) und
0,2 bis 8,0 Gewichtsteile mindestens eines Aktivators C),
bezogen auf das Gesamtgewicht der Zusammensetzung, enthält.

5. Verfahren nach einem der vorherigen Ansprüche, wobei die in Schritt a) bereitgestellte polymerisierbare Zusammensetzung mindestens ein Lactam A) enthält, das ausgewählt ist unter ε-Caprolactam, 2-Piperidon, 2-Pyrrolidon, Capryllactam, Önanthlactam, Lauryllactam, Laurinlactam und deren Mischungen.

6. Verfahren nach einem der vorherigen Ansprüche, wobei die in Schritt a) bereitgestellte polymerisierbare Zusammensetzung mindestens einen Katalysator B) enthält, der ausgewählt ist unter Natriumcaprolactamat, Kaliumcaprolactamat, Bromidmagnesiumcaprolactamat, Chloridmagnesiumcaprolactamat, Magnesiumbiscaprolactamat, Natriumhydrid, Natrium, Natriumhydroxid, Natriummethanolat, Natriumethanolat, Natriumpropanolat, Natriumbutanolat, Kaliumhydrid, Kalium, Kaliumhydroxid, Kaliummethanolat, Kaliumethanolat, Kaliumpropanolat, Kaliumbutanolat und deren Mischungen.

7. Verfahren nach einem der vorherigen Ansprüche, wobei die in Schritt a) bereitgestellte polymerisierbare Zusammensetzung mindestens einen Aktivator C) enthält, der ausgewählt ist unter Hexamethyldiisocyanat, Isophorondiisocyanat, Hexamethylendisäurebromid, Hexamethylendisäurechlorid und deren Mischungen.

8. Verfahren nach einem der vorherigen Ansprüche, wobei die in Schritt a) bereitgestellte polymerisierbare Zusammensetzung in Form von Partikeln mit einem mittleren Durchmesser im Bereich von 1 bis 2000 µm, vorzugsweise von 10 bis 1000 µm, besonders bevorzugt von 50 bis 500 µm, ganz besonders bevorzugt von 100 bis 200 µm, vorliegt.

9. Verfahren nach einem der vorhergehenden Ansprüche, wobei zur Bereitstellung der polymerisierbaren Zusammensetzung in Schritt a) die Komponenten A), B) und C) bei erhöhter Temperatur in flüssiger Form vereinigt werden, die vereinigten Komponenten vermischt werden und anschließend die Mischung durch Abkühlen verfestigt wird.

10. Verfahren nach Anspruch 9, wobei zur Bereitstellung der polymerisierbaren Zusammensetzung in Schritt a)
- die Komponenten A), B) und C) separat aufgeschmolzen und vereinigt werden, oder
- eine erste Schmelze aus dem Katalysator B) und mindestens einem Lactam A), eine zweite Schmelze aus dem Aktivator C) und mindestens einem Lactam A), und gegebenenfalls zusätzlich eine dritte Schmelze aus mindestens einem Lactam A) vereinigt werden,
die vereinigten Komponenten vermischt werden und anschließend die Mischung durch Abkühlen verfestigt wird.

11. Verfahren nach einem der vorhergehenden Ansprüche, wobei die Bereitstellung der polymerisierbaren Zusammensetzung in Schritt a) die folgenden Schritte umfasst:
a1) Vermischen der Komponenten A), B) und C) bei einer Temperatur, die gleich oder größer ist als der Schmelzpunkt einer Mischung, die nur aus den Komponenten A), B) und C) besteht,
a2) Überführen des Gemischs in Tropfenform,
a3) Abkühlen der in Schritt a2) erhaltenen Tropfen auf eine Temperatur von wenigstens 10 °C unterhalb des Schmelzpunkts des Gemischs;
a4) gegebenenfalls Granulieren der abgekühlten Mischung.

12. Verfahren nach einem der Ansprüche 1 bis 11, wobei die Behandlung in Schritt c) unter Bedingungen erfolgt, unter denen das Lactam A) im Wesentlichen auspolymerisiert, wobei die Temperatur in Schritt c) in einem Bereich von 80 bis 250 °C, besonders bevorzugt in einem Bereich von 90 bis 200 °C, insbesondere in einem Bereich von 100 bis 170 °C, liegt

13. Verfahren nach einem der Ansprüche 1 bis 11, wobei die Behandlung in Schritt c) unter Bedingungen erfolgt, unter denen das Lactam A) im Wesentlichen nicht auspolymerisiert, wobei die Behandlung in Schritt c) bei einer Temperatur von 1 bis 20 °C, bevorzugt 3 bis 15 °C, insbesondere 5 bis 10 °C, oberhalb des Schmelzpunktes des Gemischs aus den Komponenten A), B) und C) erfolgt.

## Claims

1. A process for producing a fiber-reinforced composite material with a polyamide matrix by
a) providing a solid polymerizable composition which comprises
A) at least one lactam,
B) at least one catalyst, and
C) at least one activator selected from isocyanates, anhydrides, acyl halides, reaction products of these with A), and mixtures of these,
b) applying, in solid, free-flowing form, the polymerizable composition provided in step a) onto a fiber material,
c) subjecting the fiber material obtained in step b) with the applied polymerizable composition to treatment at elevated pressure and at a temperature at which the mixture of components A), B), and C) is flowable, where this encloses and penetrates the fiber material,
d) cooling the product obtained in step c).

2. The process according to claim 1, in which, in addition,
e) the product obtained in step d) is subjected to tailoring.

3. The process according to claim 1 or 2, in which, in addition,
f) the product obtained in step d) or the product obtained in step e) after tailoring is subjected to a forming process.

4. The process according to any of the preceding claims, where the polymerizable composition provided in step a) comprises
from 50 to 99.7 parts by weight of at least one lactam A),
from 0.1 to 3.6 parts by weight of at least one catalyst B), and
from 0.2 to 8.0 parts by weight of at least one activator C),
based on the total weight of the composition.

5. The process according to any of the preceding claims, where the polymerizable composition provided in step a) comprises at least one lactam A) selected from ε-caprolactam, 2-piperidone, 2-pyrrolidone, caprylolactam, enantholactam, laurylolactam, laurolactam, and mixtures of these.

6. The process according to any of the preceding claims, where the polymerizable composition provided in step a) comprises at least one catalyst B) selected from sodium caprolactamate, potassium caprolactamate, magnesium bromide caprolactamate, magnesium chloride caprolactamate, magnesium biscaprolactamate, sodium hydride, sodium, sodium hydroxide, sodium methanolate, sodium ethanolate, sodium propanolate, sodium butanolate, potassium hydride, potassium, potassium hydroxide, potassium methanolate, potassium ethanolate, potassium propanolate, potassium butanolate, and mixtures of these.

7. The process according to any of the preceding claims, where the polymerizable composition provided in step a) is composed only of components A), B), and C).

8. The process according to any of the preceding claims, where the polymerizable composition provided in step a) takes the form of particles with an average diameter in the range from 1 to 2000 µm, preferably from 10 to 1000 µm, particularly preferably from 50 to 500 µm, very particularly preferably from 100 to 200 µm.

9. The process according to any of the preceding claims, where in order to provide the polymerizable composition in step a) components A), B), and C) are combined in liquid form at elevated temperature, the combined components are mixed, and then the mixture is hardened by cooling.

10. The process according to claim 9, where in order to provide the polymerizable composition in step a)
- components A), B), and C) are separately melted and combined, or
- a first melt made of the catalyst B) and of at least one lactam A), a second melt made of the activator C) and of at least one lactam A), and optionally, in addition, a third melt made of at least one lactam A) are combined,
the combined components are mixed, and then the mixture is hardened by cooling.

11. The process according to any of the preceding claims, where the provision of the polymerizable composition in step a) comprises the following steps:
a1) mixing of components A), B), and C) at a temperature which is the same as or higher than the melting point of a mixture composed only of components A), B), and C),
a2) conversion of the mixture into droplet form,
a3) cooling of the droplets obtained in step a2) to a temperature at least 10°C below the melting point of the mixture;
a4) optionally granulation of the cooled mixture.

12. The process according to any of claims 1 to 11, where the treatment in step c) takes place under conditions under which the lactam A) in essence polymerizes to completion, where the temperature in step c) is in the range from 80 to 250°C, particularly preferably in the range from 90 to 200°C, in particular in the range from 100 to 170°C.

13. The process according to any of claims 1 to 11, where the treatment in step c) takes place under conditions under which the lactam A) does not in essence polymerize to completion, where the treatment in step c) takes place at a temperature of from 1 to 20°C, preferably from 3 to 15°C, in particular from 5 to 10°C above the melting point of the mixture of components A), B), and C).

## Revendications

1. Procédé pour la fabrication d'un matériau composite renforcé par des fibres présentant une matrice de polyamide, dans lequel
a) on prépare une composition polymérisable solide, qui comprend
A) au moins un lactame,
B) au moins un catalyseur et
C) au moins un activateur, qui est choisi parmi les isocyanates, les anhydrides d'acide, les halogénures d'acide, leurs produits de transformation avec A) et leurs mélanges,
b) on applique la composition polymérisable préparée dans l'étape a) sous forme solide, apte à l'écoulement sur un matériau fibreux,
c) on soumet le matériau fibreux obtenu dans l'étape b), présentant la composition polymérisable appliquée, à un traitement sous pression augmentée et à une température à laquelle le mélange des composants A), B) et C) est apte à l'écoulement, celui-ci entourant et pénétrant dans le matériau fibreux,
d) on refroidit le produit obtenu dans l'étape c).

2. Procédé selon la revendication 1, dans lequel, en plus,
e) on soumet le produit obtenu dans l'étape d) à une confection.

3. Procédé selon l'une quelconque des revendications 1 ou 2, dans lequel, en plus,
f) on soumet le produit obtenu dans l'étape d) ou le produit confectionné obtenu dans l'étape e) à une déformation.

4. Procédé selon l'une quelconque des revendications précédentes, la composition polymérisable préparée dans l'étape a) contenant
50 à 99,7 parties en poids d'au moins un lactame A),
0,1 à 3,6 parties en poids d'au moins un catalyseur B) et
0,2 à 8,0 parties en poids d'au moins un activateur C), par rapport au poids total de la composition.

5. Procédé selon l'une quelconque des revendications précédentes, la composition polymérisable préparée dans l'étape a) contenant au moins un lactame A), qui est choisi parmi l'ε-caprolactame, la 2-pipéridone, la 2-pyrrolidone, le lactame caprylique, le lactame oenanthique, le lactame laurylique, le lactame laurique et leurs mélanges.

6. Procédé selon l'une quelconque des revendications précédentes, la composition polymérisable préparée dans l'étape a) contenant au moins un catalyseur B) qui est choisi parmi le caprolactamate de sodium, le caprolactamate de potassium, le caprolactamate de bromure de magnésium, le caprolactamate de chlorure de magnésium, le biscaprolactamate de magnésium, l'hydrure de sodium, le sodium, l'hydroxyde de sodium, le méthanolate de sodium, l'éthanolate de sodium, le propanolate de sodium, le butanolate de sodium, l'hydrure de potassium, le potassium, l'hydroxyde de potassium, le méthanolate de potassium, l'éthanolate de potassium, le propanolate de potassium, le butanolate de potassium et leurs mélanges.

7. Procédé selon l'une quelconque des revendications précédentes, la composition polymérisable préparée dans l'étape a) contenant au moins un activateur C) qui est choisi parmi le diisocyanate d'hexaméthylène, le diisocyanate d'isophorone, le bromure de l'acide hexaméthylènedioïque, le chlorure de l'acide hexaméthylènedioïque et leurs mélanges.

8. Procédé selon l'une quelconque des revendications précédentes, la composition polymérisable préparée dans l'étape a) se trouvant sous forme de particules présentant un diamètre moyen dans la plage de 1 à 2000 µm, de préférence de 10 à 1000 µm, de manière particulièrement préférée de 50 à 500 µm, de manière tout particulièrement préférée de 100 à 200 µm.

9. Procédé selon l'une quelconque des revendications précédentes, dans lequel, pour la préparation de la composition polymérisable dans l'étape a), les composants A), B) et C) sont rassemblés à température augmentée sous forme liquide, les composants rassemblés sont mélangés et le mélange est ensuite solidifié par refroidissement.

10. Procédé selon la revendication 9, dans lequel, pour la préparation de la composition polymérisable dans l'étape a)
- on fond les composants A), B) et C) séparément et on les rassemble ou
- on rassemble une première masse fondue constituée par le catalyseur B) et au moins un lactame A), une deuxième masse fondue constituée par l'activateur C) et au moins un lactame A) et le cas échéant en plus une troisième masse fondue constituée par au moins un lactame A),
on mélange les composants rassemblés et on solidifie ensuite le mélange par refroidissement.

11. Procédé selon l'une quelconque des revendications précédentes, dans lequel la préparation de la composition polymérisable dans l'étape a) comprend les étapes suivantes :
a1) mélange des composants A), B) et C) à une température qui est identique ou supérieure au point de fusion d'un mélange qui n'est constitué que par les composants A), B) et C),
a2) transformation du mélange en forme de gouttes,
a3) refroidissement des gouttes obtenues dans l'étape a2) à une température d'au moins 10°C sous le point de fusion du mélange ;
a4) le cas échéant granulation du mélange refroidi.

12. Procédé selon l'une quelconque des revendications 1 à 11, le traitement dans l'étape c) ayant lieu dans des conditions dans lesquelles le lactame A) polymérise de manière essentielle, la température dans l'étape c) se situant dans une plage de 80 à 250°C, de manière particulièrement préférée dans une plage de 90 à 200°C, en particulier dans une plage de 100 à 170°C.

13. Procédé selon l'une quelconque des revendications 1 à 11, le traitement dans l'étape c) ayant lieu dans des conditions dans lesquelles le lactame A) ne polymérise pas de manière essentielle, le traitement dans l'étape c) ayant lieu à une température de 1 à 20°C, de préférence de 3 à 15°C, en particulier de 5 à 10°C au-dessus du point de fusion du mélange des composants A), B) et C).
